**Europäisches Patentamt**

**European Patent Office**

**Office européen des brevets**

(19)

(11) Publication number : **0 339 948 B1**

(12) # EUROPEAN PATENT SPECIFICATION

(45) Date of publication of patent specification :
02.08.95 Bulletin 95/31

(51) Int. Cl.$^6$ : **H04N 7/30, H04N 11/04**

(21) Application number : **89304129.3**

(22) Date of filing : **26.04.89**

(54) Compressing and decompressing digital color video statistically encoded data.

(30) Priority : **27.04.88 US 186637**
**27.04.88 US 187050**

(43) Date of publication of application :
**02.11.89 Bulletin 89/44**

(45) Publication of the grant of the patent :
**02.08.95 Bulletin 95/31**

(84) Designated Contracting States :
**AT BE CH DE ES FR GB GR IT LI LU NL SE**

(56) References cited :
**EP-A- 0 107 072**
**EP-A- 0 261 561**
**DE-A- 2 304 344**
**FR-A- 2 524 740**
**PATENT ABSTRACTS OF JAPAN vol. 12, no. 24 (E-576) 23 January 1988, & JP-A-62 180673 (FUJITSU) 07 August 1987,**

(73) Proprietor : **BIL (Far East Holdings) Limited (a Hong Kong corporation)**
**having a place of business at**
**7825 Fay Avenue,**
**Suite 380**
**La Jolla, California 92037-4241 (US)**

(72) Inventor : **Music, John**
**14711 Mulberry**
**Irvine California 92714 (US)**
Inventor : **Thomas, James L.**
**1520 Shasta Way**
**Placentia California 92670 (US)**
Inventor : **Smith, Gordon H.**
**13072 Wheeler Place**
**Santa Ana California 92714 (US)**

(74) Representative : **Cross, Rupert Edward Blount et al**
**BOULT, WADE & TENNANT**
**27 Furnival Street**
**London EC4A 1PQ (GB)**

EP 0 339 948 B1

## Description

This invention relates generally to information signal processing, and in particular to the field of processing time sequential information signals, such as video signals, for the purpose of reducing the amount of information to be transferred from an encoding site to a decoding site. A particular use of the invention is in the communication of color video data over telephone lines.

Encoding of digital television signals ordinarily require a transmission rate of approximately 200 Mbits/s. Recent developments in coding systems have permitted the transmission rate to be cut to less than 2 Mbits/s. Coding systems using block oriented analysis of video picture frames and processing by a conventional hybrid discrete cosine transform (DCT) coefficient permit transmission at rates of between 64 Kbits/s and 384 Kbits/s. Such a system is described in Gerken and Schiller, "A Low Bit-Rate Image Sequence Coder Combining A Progressive DPCM On Interleaved Rasters With A Hybrid DCT Technique", IEEE Journal on Selected Areas in Communications, Vol. SAC-5, No. 7, August, 1987. Adaptive coding techniques applied to such DCT processing have allowed video data transmission at rates as low as one to two bits per pixel, as is described in Chen and Smith, "Adaptive Coding of Monochrome and Color Images", IEEE Transactions on Communications, Vol. COM-25, No. 11, November 19, 1977. However, information transmitted at such low data rates seriously affects the ability to reconstruct a sufficient number of frames per second so that a real time picture is acceptable to a viewer. High capacity telephone lines are available which will carry transmissions at a rate of up to 1.544 Mbits/s, but such lines are extremely expensive at a dedicated use rate, and are still quite expensive at a scheduled use rate. Lower capacity telephone lines are available which permit transmission at rates of up to 56 Kbits/s and 64 Kbits/s. Relatively expensive video digital and coding devices are commercially available which will transmit a video signal at 56,000 bits per second, so that it is necessary to utilize a combination of a device of this nature with the high capacity 1.544 Mbits/s telephone line to allow a framing speed much faster than about one frame per second. The current transmission rate limit of ordinary telephone lines approaches 18,000 bits per second, so that transmission of real time sequencing of video pictures over ordinary telephone lines has been viewed in the prior art as not being feasible.

Various schemes for reducing the amount of redundancy of information to be transmitted in a digital video signal have been used. One technique is to utilize a slow scan camera; and another technique is to transmit every nth scanning line for each frame. Another technique involves the sending of only those parts of a picture frame which are deemed to be important or to have changed in some significant manner, by dividing the picture frame into a number of segments or blocks which are typically 3X3 or 4X4 groups of pixels, and analyzing the content of the blocks. These techniques tend to also reduce the resolution of the video picture.

Another technique in the reduction of transmission time which does not decrease the resolution of a picture transmitted is run length encoding. In run length encoding, the scan lines of a picture frame are encoded as a value of the color content of a series of pixels and the length of the sequence of pixels having that value or range of values. The values may be a measure of the amplitude of a video signal, or other properties of such video signals, such as luminance or chrominance. An example of a system which utilizes run length coding of amplitude of video signals is U.S. Patent No. 3,609,244 (Mounts). In that system, a frame memory also determines frame to frame differences, so that only those differences from one frame to the next are to be transmitted. Another example of a method for transmitting video signals as compressed run length values which also utilizes statistical coding of frequent values to reduce the number of bits required to represent data is U.S. Patent US-A-4,420,771 (Pirsch).

Ideally, compression of color video information to allow real time sequencing of picture frames at a range of up to 15 frames per second, and at bit rates as low as 11,500 bits per second would be desirable, to allow the communication of color video data over ordinary telephone lines. A video data compression system able to achieve equivalent data transmission rates as systems using higher quality telephone lines with more efficient and less costly equipment than is currently available would also be desirable.

According to one aspect the present invention provides a method of compressing digital colour video data in a video system having means for providing a color video signal for a plurality of video picture frames, each picture frame comprising a plurality of scan lines composed of a plurality of pixels and utilizing a digitized color video signal having three digital color components, said video system including means for determining a luminance function for each pixel, means for determining which of said pixels on each scan line represent decision points based upon said luminance function, each decision point defining the end of one run length and the beginning of another run length, and means for encoding at least a portion of said plurality of pixels in each scan line as a plurality of combinations of said run lengths and associated three digital color components, each of said run lengths being of a first digital word size, and said three digital color components being of second, third and fourth digital word sizes, respectively, the method comprising the steps of:

a) encoding all of said digital color components in said picture frame according to a look-up table in a memory means of digitally compressed color codes of the most visually significant color combinations of a fifth digital word size smaller than the sum of said second, third and fourth digital word sizes; and

b) combining each of said run lengths with associated digitally compressed color code to represent at least a portion of said picture frame in said memory means.

According to another aspect the present invention provides a system for compressing digital color video data in a video system having means for providing a color video signal for a plurality of video picture frames, with each picture frame comprising a plurality of scan lines composed of a plurality of pixels and utilizing a digitized color video signal having three digital color components, said video system including means for determining a luminance function for each pixel, means for determining which of said pixels on each scan line represent decision points based upon said luminance function, each decision point defining the end of one run length and the beginning of another run length, and means for encoding at least a portion of said plurality of pixels in each scan line as a plurality of combinations of said run lengths and associated said three digital color components, each of said run lengths being of a first digital word size, and said three digital color components being of second, third, and fourth digital word sizes, respectively, said system for compressing digital color video data comprising:

a) means for encoding all of said digital color components in said picture frame according to a look-up table in a memory means of digitally compressed color codes of the most visually significant color combinations of a fifth digital word size smaller than the sum of said second, third and fourth digital word sizes; and

b) means for combining each of said run lengths with associated digitally compressed color codes to represent at least a portion of said picture frame in said memory means.

According to another aspect the present invention provides a method of decompressing digital color video data compressed in a video system utilizing a plurality of digitized signals representing a plurality of combinations of run length of a first digital word size, said run length being determined on the basis of a luminance function of the pixel data of the uncompressed original color video data, and associated digitally compressed color code of a second digital word size for at least a portion of a plurality of scan lines of a video picture frame, and utilising a look-up table of said digitally compressed color codes for the most visually significant color combinations of three corresponding digital color components, said method comprising the steps of:

a) dividing each of said combinations into a run length and associated digitally compressed color code;

b) decoding said digitally compressed color codes according to said look-up table to form a table in a memory means of said three digital color components for each said run length, said three digital color components having third, fourth, and fifth digital word sizes, respectively, the sum of which is larger than said second digital word size; and

c) storing at least a portion of said run length and corresponding digital color components in an array in a buffer memory means of run length and digital color component data representing said plurality of scan lines in said video picture frame.

According to a further aspect the present invention provides a system for decompressing digital color video data in a video system utilizing a plurality of digitized signals representing a plurality of combinations of run length and associated digitally compressed color code for at least a portion of a plurality of scan lines of a video picture frame, and utilising a look-up table of said digitally compressed color codes for the most visually significant color combinations of three corresponding digital color components, said run length being of a first digital word size and being determined on the basis of a luminance function of the pixel data of the original uncompressed color video data, and said digitally compressed color codes being of a second digital word size, respectively, the system comprising:

a) means for dividing each of said combinations into a run length and associated digitally compressed color code;

b) means for decoding said digitally compressed color codes according to said look-up table to form a table in a memory means of said three digital color components for each said run length, said three decoded color components having third, fourth, and fifth digital word sizes, respectively, the sum of which is larger than said second digital word; and

c) means for storing at least a portion of said run length and said corresponding digital color components in an array in a buffer memory of run length and color component data representing said plurality of scan lines in said video picture frame.

In a preferred embodiment, adjacent run lengths on each scan line for which the adjacent run lengths have associated color components which vary less than a predetermined amount are concatenated to a sixth digital word size which may be larger than the first digital word size of the run lengths. Either or both of the run length portion and the compressed color component code portion of the combinations of run length compressed color codes are preferably statistically encoded by determining the frequency of occurrence of values of either or both portions. A plurality of different code tables are provided. The most frequent occurrence of values in a portion is statistically encoded in a first code table by a one bit size digital word. The next three most frequent occurrences are selected and encoded in a second code table by a two bit digital size word, and all of the other values are likewise encoded in at least one additional code table by a digital word size larger than two bits. Provision is also made for optionally encoding line-to-line differences, frame-to-frame differences, and determining and encoding movement of distinctive edges of sequences of combinations of run lengths and compressed color codes from frame-to-frame.

Other aspects and advantages of the invention will become apparent from the following detailed description and the accompanying drawings illustrating by way of example the features of the invention.

FIGURE 1 is a schematic diagram of the system and method for compressing color video data in a video communication system;

FIG. 2 is a luminance plot across one scan line in a video picture;

FIG. 3 shows a run length representation of features in a video scan line;

FIG. 4 shows a run length representation of transitions about slope decision points of a video scan line;

FIG. 5 shows a representation of the reconstructed video scan line for display;

FIG. 6 shows a representation of how the run length data is converted to display data with transitions between runs; and

FIG. 7 is a schematic diagram of a method and system for decompressing color video data in a video communication system;

FIG. 8 shows the system and method for compressing color video data in a video communication system including an additional processor subsystem;

FIG. 9 is a more detailed schematic diagram of a combined I/O control section, processor section, and input construction engine and reconstruction engine;

FIG. 10 is a flow diagram illustrating the compression of digital word sizes of run length and color components;

FIG. 11 is a flow chart illustrating the additional signal processing of color video data;

FIG. 12 shows the system and method for decompressing the color video data in a video communication system including an additional processor subsystem;

FIG. 13 is a flow diagram of the decoding of the additional data compression processing from Fig. 11;

FIG. 14 is a flow diagram illustrating the decompression of the processed digital words of run length and color components of Fig. 10; and

FIG. 15 is an illustration of a three-dimensional color cube.

As is illustrated in the drawings, in a preferred implementation of the invention, the video communication system is capable of producing a color video picture using an RGB video camera, generating an analog RGB signal at the normal 60 fields per second, with each field representing half of the picture in an interlaced mode. The signal for the video picture frames generated by the camera 10 is received by an analog to digital converter 12, which converts the red, green and blue (RGB) analog components into digital RGB components, which are each digitized as six bit digital words, forming packets of bits for the RGB components for each pixel of the color video picture of eighteen bits.

The type of the device used to generate the source color video picture is not crucial to the invention, as a camera generating a standard NTSC composite signal which is converted to an RGB digital output would also be suitable as would a camera using a field rate other than the 60/sec. rate of a NTSC camera. The output of the camera also does not need to be strictly RGB, since other three color component groups may be used to create and transmit color video pictures. For example, the three digital color component signals may be cyan, magenta, and yellow; hue, saturation, and intensity; or even two distinct colors and a third parameter based upon the entire video signal, such as hue, saturation or intensity of an original analog video signal, so that there would be some automatic weighting of the color information generated by the camera.

It is also not essential that the three color components be represented by the same number of bits, since it is known in the television industry that certain ranges of colors are not as easily perceived by the human eye. Such a weighting of information could involve a reduction in the number of bits used for the red component in an RGB scheme, for example, thus permitting transmission of more gradations of other color information that is actually perceptible.

In addition, the source of the color video pictures to be compressed may be a storage means, such as video disk, a computer file storage media, a video tape, or the like from which the color video information can be processed for introduction into a color video data compression system of the invention.

The digitized RGB signal is received by the transition engine portion 14 of the image capture engine 16, which preferably includes integrated circuit means and associated memory means. The first major part of the image capture engine is the transition engine which includes circuitry for determining a luminance function based upon the three color component video signal for each picture element, or pixel, of each scan line in the sequence of video picture frames generated by the analog front end of the system. In the preferred mode, the luminance converter 18 sums the bits from each of the three digital color components for each pixel in the scan lines of the video picture frame to get a luminance (or intensity) value and performs further processing of the data obtained. In the system of the present invention each scan line preferably contains 480 pixels, which matches the resolution of the camera and which provides for better resolution than is typically available in the prior art, in which generally only 256 pixels are utilized per scan line. The luminance of the three color components may be weighted to give greater significance to one color or two colors to provide the luminance function, and may also be based in part upon an original source analog video signal. However, the luminance function is preferably based in part at least upon the sum of the three digital color components. The luminance function derived from the sum of the three six bit color components therefore has a digital word size of eight bits. This luminance function for each pixel is utilized in the input capture engine for evaluating one or more decision parameters based upon the luminance function for determination of those pixels which operate as decision points about which the one or more of the decision parameters are found to vary from a prestored set of threshold values.

The luminance function is an excellent indicator of color changes in the picture, or movements of objects in the picture. In the image capture engine the one or more decision parameters based upon the luminance function may also be used as the basis for determination of differences from line to line, and of distinctive sequences of which define edges of objects which can be determined to be moving from frame to frame. Generally, the luminance, or other combination of color components which comprise the luminance function, undergoes significant changes where there are changes in the characteristics of the picture.

The camera also introduces anomalies or artifacts into the video picture due to noise in the color sampling resolution which ideally should be eliminated to reduce the amount of data to be transmitted since they contribute nothing beneficial to the picture. When the picture is displayed with a new field every 60th of a second, the effect of such anomalies is averaged out by the human eye. Areas having a smooth appearance and actual detail upon close observation seem to "crawl". This appearance is also known as the "mosquito effect". When a picture is frozen so that only one field or picture frame is being examined, the picture takes on a grainy, speckled appearance. The impact of the noise on the luminance data is in the form of tiny variations in the computed luminance. When the picture is digitized, the digitizing process also converts all of these artifacts to digital representations, even though they do not actually represent picture detail. The processing of luminance in the image capture engine operates to eliminate such meaningless details.

One preferred method eliminating the non-essential details caused by noise in the luminance data is to determine the points of change based at least in part on the luminance function for pixels in the scan lines by comparing differences in one or more decision parameter with corresponding adaptive thresholds. The decision parameters are preferably comprised of differences of the luminance function between pixels, determined between proximate pixels (Diff-1) in a scan line, n plus one n plus two, or even a further distance away, where n represents the position on a scan line of the pixel being examined for changes in luminance; between adjacent first differences (Diff-2), and a cumulative parameter (Cumdiff) which is a sum of the individual difference functions Diff-1, and Diff-2. Each decision parameter has its own corresponding adaptive threshold, having a default value which is subject to modification by the system in response to operator or processor settings. The adaptive threshold preferably has a default value which may be adjusted by the input capture engine responsive to operator selections for resolution. The selecting of the threshold parameters for determining either the feature or transition decision points is quite subjective. The selection of the parameters determines the number of data points required to define the picture and it also determines the overall perceptual quality of the picture.

Typically for the feature run length determination, two thresholds are used. One is the cumulative change in luminance since the last decision point, Cumdiff. Cumdiff will trigger a decision point if it was greater than 6 and the number of pixels since the last decision point was greater than 5. Another decision parameter is the sum of two adjacent difference values, Diff2 (this is the same as the difference between luminance values that are two pixels apart). If the Diff2 value is computed to be greater than typically 32, the logic wil signify that the line is entering an edge, which identifies a decision point, and will stay in the edge characteristic until the Diff2 value falls below 20. When the edge mode is exited, the color of the next pixel is carried all the way back to the pixel where the starting edge determination was made. Also, if Diff2 changes sign, it signifies a new decision point. Changing the values for the cumdiff thresholds greatly affects the quality and data complexity of the picture.

In the slope determination of decision points (apexes), three general conditions are used. An initial slope is determined at the decision point and all measurements are based on that slope. The initial slope, INITS, is determined by computing the follow-

ing function termed NDIFF2:

$$NDIFF2 = (luminance_{(i + 2)} - luminance_{(i)})/2$$

INITS is the value of NDIFF2 immediately after the decision point.

CUMDIFF in the slope case is defined the following way:

$$CUMDIFF_{(i)} = CUMDIFF_{(i - 1)} + NDIFF2_{(i)}$$

If the absolute value of the CUMDIFF is typically greater than 20 and the number of pixels in the run length is typically greater than 10, then a decision point will be triggered. Similarly, if the absolute value of $NDIFF_2$ is less than or equal to typically 4 and the run length is typically greater than 5, a decision point will be triggered unless the last decision point was also triggered in this manner. The third decision parameter is also based upon NDIFF2:

$$TRIGVAL_{(i)} = NDIFF2_{(i)} - INITS$$

The threshold for TRIGVAL is usually set in the range of 4 to 10 and will trigger a decision point any time the absolute value reaches or exceeds the set value and the run length is at least 2 pixels. Other techniques may be used but these seem to give good quality pictures with an acceptable number of data points.

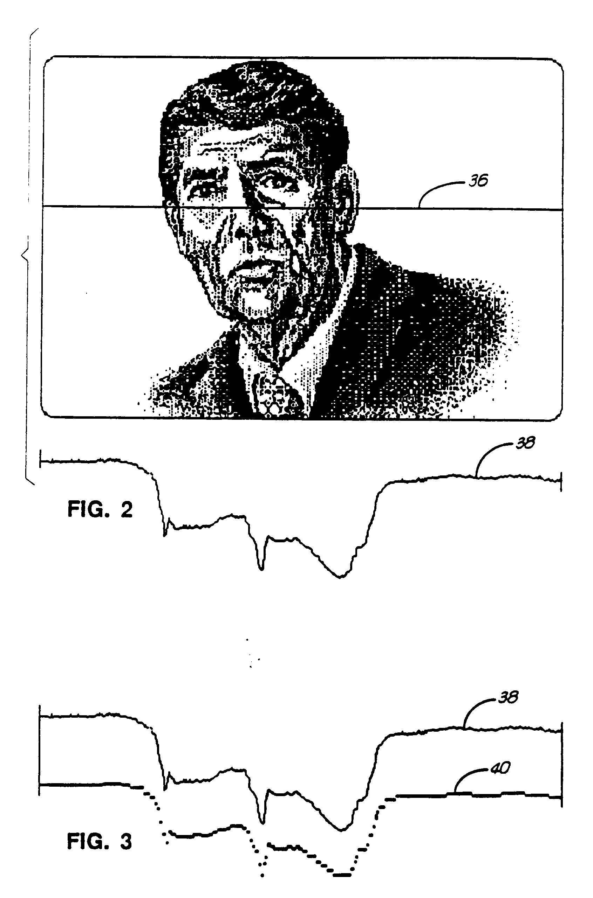

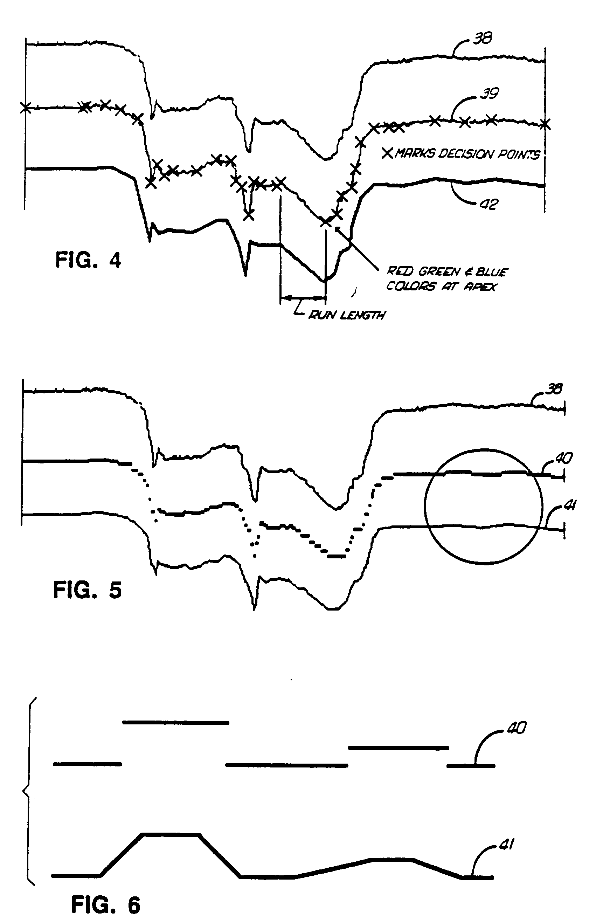

A graphic representation of a typical plot of luminance across a line of a video picture is shown in Figure 2. The luminance function of the pixels intersected by the scan line 36 is graphically represented by line 38. As is shown in Figure 3, a graph of the decision points based upon comparison of one of the decision parameters with the corresponding adaptive difference threshold in a feature encoding technique, results in stepped line 40, a sequence of horizontal straight lines across the luminance pattern. Each horizontal line represents a separate length of a specific color.

A second approach which may be used to eliminate the non-essential details is a transition or slope encoding technique, which is illustrated in Figure 4. In this technique the rate of change of the differences in the decision parameter between pixels is determined, and the rates of change of these differences are compared with an adaptive, prestored difference rate of change threshold to determine decision points or apex points. These change points or decision points are indicated as X's on line 39. They indicate the location of the next apex. "Run length" is defined as the pixel distance between decision points, for both the feature encoding and slope encoding techniques. According to the transition or slope encoding technique, the luminance data results in a line 42 representing a series of apexes or slope decision points, which may be used for controlling the color segments between decision points. A drawing engine can produce a smooth transition of color values for the run length between decision points when the encoded information is to be retrieved. In this technique, for each scan line an initial color is transmitted, followed by as many sequences of run length and color values as are necessary to represent the picture frame content. In either implementation the information is displayed as a series of slopes. For the run length encoded data artifical color slopes are inserted into the display line as shown in Fig. 5. In this case the slopes are generated as a function of the luminance shift between runs and the length of the adjoining runs as shown in Fig. 6.

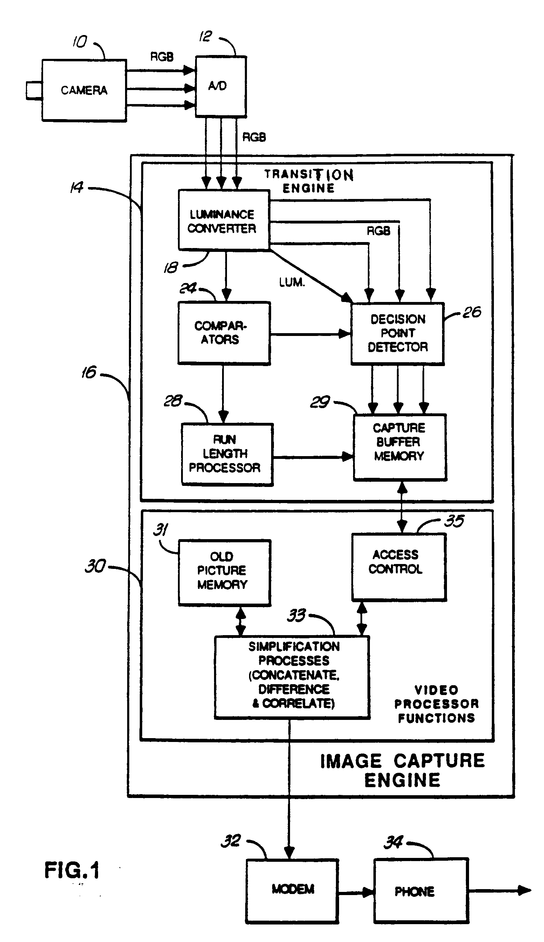

In the image capture engine of Fig. 1, the decision point detector 26 for determining decision points may alternatively be able to utilize either one of these methods for fixing the decision points in the color of the pixels in the picture, as each method has its respective advantages and disadvantages. The feature coding technique is typically more appropriate for pictures with a complexity of objects with distinctive edges or lines. On the other hand, the slope encoding technique is most suitable for encoding gradual transitions in shading or gradual color changes, but may require additional coding to represent complex pictures with images having many edges and lines. In the preferred implementation of the slope encoding technique, a sequence of thresholds will be compared with decision parameters, and the cumulative parameter (Cum-diff) and an adaptive cumulative threshold will also be utilized in determining decision points, to account for those slow, gradual rates of change of luminance which would still result in an accumulated luminance change which is significant enough to merit identification of a decision point.

The three component color codes are also operated on in the run length processor 28 to drop the two least significant bits from the six bit values for the color components, reducing each of the color components in the preferred mode to four bit digital words. Alternatively, in one preferred embodiment, the transition engine may also contain a predetermined color map representation of three-component colors, with an n-bit code corresponding to a particular color combination. Here, the colors of the image are matched as closely as possible with the colors in the color map. As a further alternative, the color codes could also be rounded. These truncated or reduced digital color components are then encoded with the run lengths between decision points in the run length processor 28. Although the preferred bit size for the reduced color components is four bits, just as the input digital word size for the color components from the analog front end can be of different sizes to vary the informational content, the reduced digital color components may also be of different sizes. A particular combination of digital word sizes for color components may include a reduced size for the red component, due to the recognition in the industry of the reduced perceptibility of this component.

The feature and slope encoding techniques allow for a variable number of bits to be used to represent an initial picture frame and then changes in subsequent picture frames, in order to encode the minimum number of bits for each picture frame. This is a significant improvement over the prior art which typically analyzes a four by four or three by three block of pixels to compress the information in such a block, which always results in the same number of bits being utilized to represent the informational content in the picture, whether there have been changes outside the segment or not.

The second major portion of the image capture engine is the capture buffer memory (CBM) 29, which receives the encoded run lengths and reduced color components representing some 200 lines of data from the picture frame. Alternatively, if the data rate required becomes too high to send pictures at a desired speed, lesser numbers of scan lines can be stored, such as 150 or 100 lines. The run length and color component information in the capture buffer memory is then transmitted to the video data processor 30, which accesses the run length and color data in the capture buffer memory by an access control 35, and operates as an interface to transform and transmit the video information in a format suitable for transmission by the modem 32, connected to the telephone 34, and which may include means for further compressing the video data, at 33. The video data may also be compared with a previous picture frame stored in an old picture memory 31.

It is possible in a simplification processor 33 of a video data processor 30 to further analyze the difference between color values of pixels after the color codes have been truncated to provide the reduced color component codes, and to concatenate run lengths of such reduced color component codes which vary less than a given threshold value, or to further concatenate run lengths of the reduced color codes based upon variance of one or more of the decision parameters with respect to a corresponding threshold. As the run length code is typically at a maximum of four bits to be compatible with run lengths and color code combinations of 16 bits, with 16 bit computer buses in the current implementation, concatenation of a sequence of pixels for each run length would be expected to permit coding of up to sixteen pixels per run length. However, in the current implementation the values 0 to 15 are used to represent run lengths of from 2 to 17 pixels, since run lengths of 0 and 1 are not meaningful. Alternatively, longer run lengths may be determined initially as well, as may be compatible with different capacity computer buses, to permit run lengths of greater than 4 bits and run length color code combinations greater than 16 bits.

As mentioned previously, it is expected that the limits of compression required for adequate smoothing of information in a real time sequencing of video pictures in telecommunication would be about 15 frames per second for transmission over conventional telephone lines. It would be possible to use a modem at 1200 bps (bits per second), but this would considerably slow the number of frames per second possible in the communication system. Ideally, the system is configured for half duplex mode, and a full duplex mode of configuration would be expected to require two telephone lines. Ideally the modem that is to be used is one which would utilize the largest bandwidth possible, and may be conventional 2400 bps or 9600 bps modem or special modems providing higher bit rates may be used.

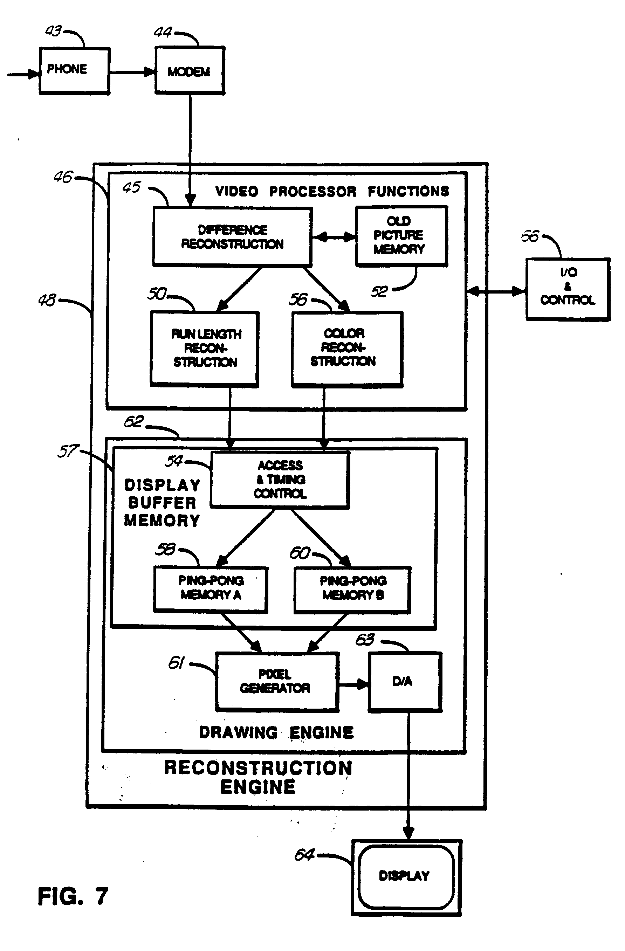

With reference to Fig. 7, in the preferred embodiment, a telephone 43 receives a transmitted signal from a transmitter modem over ordinary telephone lines and the receiver modem 44 converts these signals to an electronically digitized format to be receivable by video data processor 46. The video data processor then adapts the digitized signals which represent encoded run length and color information to a format which is acceptable for reception by the drawing engine 62. The drawing engine of the reconstruction engine 48 converts the run length data to slope form and presents it pixel by pixel to the digtal to analog converter for use by the monitor. Alternatively, the video processor interface could be adapted to receive the compressed color video data from a computer system 66 retrieving the information from magnetic media, such as a hard disc or high capacity floppy discs, or from a video disc player for displaying a much greater length series of video picture frames, in a form such as for a video movie. The video data processor preferably includes microprocessor means and associated memory means (not shown) programmed to carry out various functions. A preferred function is to reconstruct a total picture frame data representation in terms of run length and color codes from an old picture memory 52 of the last picture frame data, and an array of the run lengths and color codes which have changed from the last picture frame. This difference reconstruction function 45 prepares picture frame data for run length reconstruction at 50 and color code reconstruction 56, utilizing control signals embedded in the run length and color data.

As the run length and color information are received by the video data processor 46 of the reconstruction engine 48, the digitized signals are typically of a digital word size of sixteen bits. The number may vary, depending upon the type of statistical encoding used. Alternatively a color code (which may be from 4 to 8 bits in length) may be used to select specific colors from a map or pallet so that fewer bits need to be sent. As compressed and encoded from an input construction engine as described earlier, the digital word size of the run length portion actually processed would typically be four bits, and the digital word size of the color code portion would be twelve bits. As mentioned previously, the preferred apportioning of bit sizes of the three color component codes is such that each digital color code component is of a digital word size of four bits. However, only small portions of the picture which have actually changed may be actually encoded, with appropriate control data for skipping run lengths which may not have changed being embedded in the transmitted information. The run length reconstruction or decoder function 50 of the video data processor operates to separate the run length portion from the digitized signal, and the color code reconstruction function 56 of the video data processor, for decoding the color codes, can separate the digital color components from the incoming digitized signals. However, advanced signal processing and compression of the data may also involve the concatenation of run lengths to a digital word size of eight or nine bits, so that the run length decoder function would then also operate to separate the eight or nine bit digital word size into four bit digital word portions. In the event that the run length codes were concatenated to an eight or nine bit digital word size, the color code portion would also have been subjected to advanced data compression techniques to reduce the three digital color codes each of four bits to a combined color code portion having a digital word size of eight bits. The color reconstruction function 56 would then also operate to convert the eight bit digital color codes to three digital color codes of the four bit digital word size.

From the reconstruction engine run length decoder and color codes sections the run length and color code information is transferred from the video data processor via the access and timing control circuitry 54 in the drawing engine 62 to a drawing engine display buffer memory 57 which ideally comprises dual memory buffers, pingpong A 58 and pingpong B 60. The access and timing control 54, under the direction of the video processor, sends the reconstructed run length and color information for storing in one of the ping pong buffer memory portions until the information for an individual picture frame is complete; that picture is then displayed while the next sequential picture information received by the system is sent and stored in a similar fashion in the second portion of the display buffer memory. Each block of the display buffer memory needs to be of a sufficient capacity to avoid overflow of the measure by the run length and color code information, and it has been found that a random access memory of a capacity of 32K 16 bit digital words is adequate for the picture reconstruction.

The drawing engine 62 includes a pixel generator 61 for converting the run length and color codes stored in the individual pingpong memories to individual points for display on a monitor 64. The access and timing control 54 of the drawing engine is responsible for all display timing and control for the pixel generator. The drawing engine generates a write strobe to write the runs of color information to the series of points to be converted from digital to analog for display.

In the preferred embodiment for pixel generation from feature encoded run length data, each end of a run length of a particular color combination is essentially tapered to provide a smooth color transition from one run length to another. The resulting smoothed reconstructed video line 41 is depicted in Figure 6. When a run length is short, it usually is an indication that the color level is changing rapidly. If the run length is long, it usually indicates the color level is changing slowly. When the change in the luminance function, given by one of the decision parameters, is large, it usually indicates a high probability of an edge in a picture, whereas if the change is small, it is probably an indication of a shading effect. Based upon the run lengths and one or more decision parameters, the pixel generator determines where intermediate decision points should be placed, and interpolates smooth color transitions for each of the RGB color components from one intermediate decision point to the next. The ends of each scan line similarly transition when they contact another color, so that the beginning and ending of a scan line may have a single intermediate decision point adjacent the end, to define a relatively sharp transition from the edge of the picture to the adjacent color. The interpolation is preferably performed linearly, but may also alternatively be shaped to more faithfully depict curved surfaces. If the image is slope encoded, the pixel generates a smooth transition from one apex to the next without injecting an intermediate decision point.

The pixel generator of the drawing engine includes all the necessary functional sections to implement the color interpolation between pairs of points designated by the run lengths, and preferably converts the four bit color components to either six or eight bit digital words, for six or eight bit precision, in three separate channels, with one for each of the RGB components. Increasing the bit size allows the pixel generator to generate smoother gradations of color transitions between pixels of different colors. For example, although four bit digital word sizes permit up to 4,096 color combinations of red, green and blue components, only up to 16 gradations of any one of the color components would be possible. Increasing the bit size up to 6 allows for up to 64 gradations of any individual component, and up to 262,144 total combinations. An eight bit digital word size permits an even greater range of gradations for an individual component. However, as discussed previously, the full digital word sizes for the color components need not be equal, and may be in fact arranged so as to allow a broader range of colors for one or two of the color components, at the expense of one of the color components which would only require a smaller digital word size to accommodate its perceptibility. The pixel generator therefore dynamically generates a complete digital representation of the pixels of a picture frame to be displayed on a pixel-by-pixel basis, and this information is transmitted on RGB three channels from the pixel generator to the digital to analog converter 63 which converts the video signal to analog form for displaying on the monitor 64.

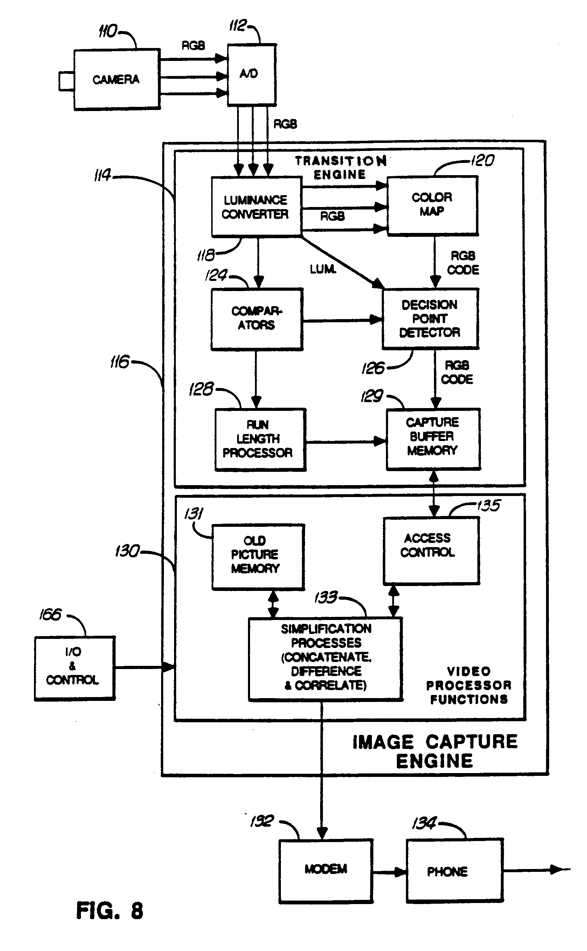

Referring to Figs. 1 - 9, elements bearing reference numerals 110 to 134 correspond to elements bearing reference numerals 10 to 34. Fig. 8 shows another embodiment with image capture engine 116 having a video processor 130 functioning to further simplify and compress data from the transition engine 114. The output from capture buffer memory 129 is received by the processor subsystem 130 having standard input and output and control 166. The standard I/O 166 typically might include a keyboard, diskette control, a date and time clock, and a monitor output and control. Output from the processor subsystem is typically connected to a modem 132, which is in turn connected to a telephone 134 for transmission of the compressed information over ordinary telephone lines. More than one modem may be used to provide faster image display rates or higher quality color images.

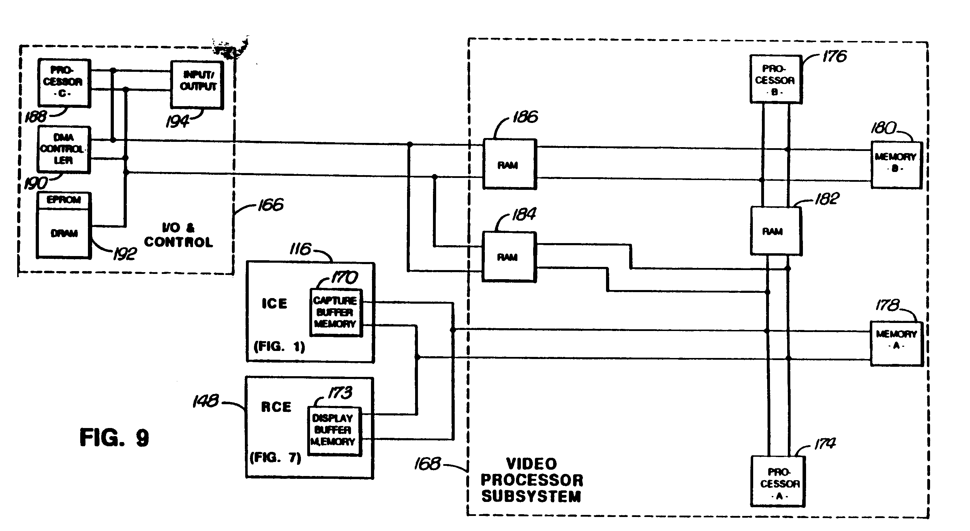

With reference to Fig. 9, the video data processor subsystem 168, which performs the compressing and decompressing functions of the video processor 130 and the video processor 146, to be explained further hereinafter, is most preferably adapted to be connected to both an image capture engine (I.C.E.) and a reconstruction engine (R.C.E.) for use in compressing and decompressing video color data in a two-way communication system. However, where the processor subsystem is being used for compressing the color video information, it should be apparent that the reconstruction engine need not be connected to the same processor subsystem as is connected to the input construction engine. If a video communication system is configured so that the image capture system circuitry is part of a camera, and the reconstruction engine circuitry is part of a display monitor, different processor subsystems 130 and 146 would generally be utilized by the image capture engine and the reconstruction engine.

As is illustrated in Fig. 9, the shared video data processor subsystem receives input from shared capture memory buffer 170 for receiving input from the image capture engine, and preferably also sends output to a shared display memory buffer 172 which contains section 154, 158 and 160 of the drawing engine, for output to the reconstruction engine. Each of these memory buffers requires sufficient capacity to avoid overflow the encoded information, and it has been found in practice that a memory space of 32K by 16 bits is adequate for these purposes. Memory buffer 170 is also preferably shared for input and output between the image capture engine and the video data processor; and the memory buffer 172 with its dual pingpong memory section is similarly shared for input and output between the reconstruction engine and the video data processor. The processor subsystem includes two microprocessors, which are preferably Motorola 68020 32 bit processors, processor "A" 174, and processor "B" 176. As processor "A" typically performs most of the processing functions of the processor subsystem, it is provided with a private data memory "A" 178 of 512K bytes. Processor "B" is provided with a lesser amount of memory in memory "B" 180 of 256K bytes. Also provided between processor "A" and processor "B" for communication between the processors is a dual port ram 182 of 16K bytes. Dual port RAMS 184 and 186 of 32K bytes are also provided as buffers between processors "A" and "B" and the I/O processor section 166.

The microprocessor "C" 188 for the I/O control section 166 is preferably an Intel 80286 having DRAM refresh and a direct memory access 190 for diskette control and a DRAM 192 of 512K bytes. Input/output ports 194 are designated generally for the standard I/O, which may include disk drives, keyboard, a monitor, and the like.

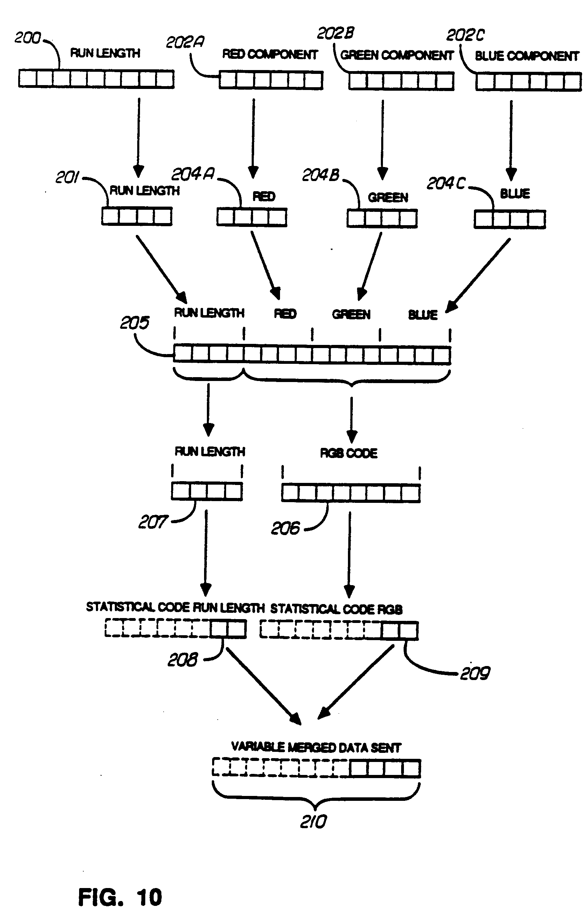

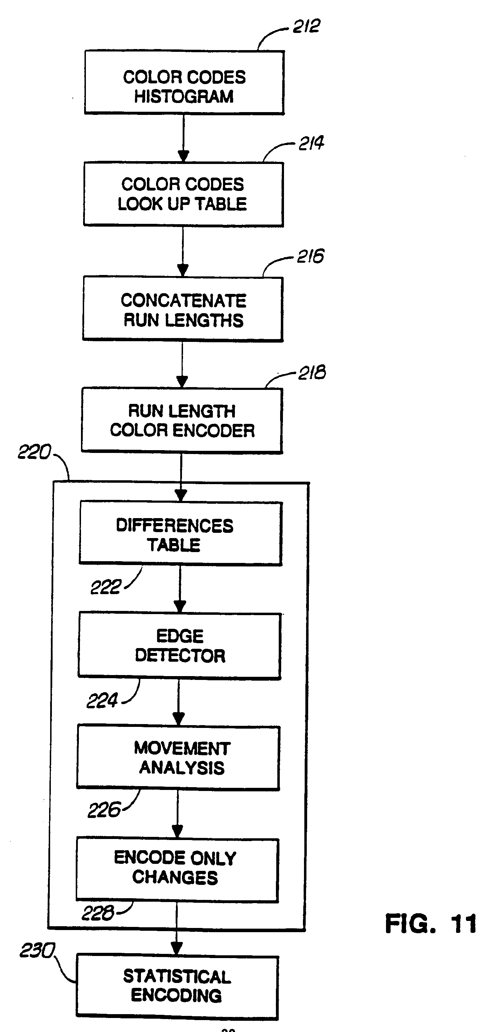

With reference to Figs. 8, 10 and 11, the operation of the image capture engine and the processor subsystem 130 having simplifying and compressing functions will be described. The run lengths 200 of a sequence of pixels in a scan line having like color values are determined as nine bit digital words which are divided in the image capture engine as four bit digital words 201. The RGB color components 202a, b, c as utilized for determining the luminance functions in section 118 are six bit digital words used for determining decision points for run lengths in the decision point logic 126. These colors are truncated by removing the two least significant bits from each six bit word in the color code truncation circuitry 120 to form four bit digital words 204a, b, c. The run length encoder 128 maps a series of run length and RGB color code combinations 205 to the capture buffer memory 129, in preparation for the further processing of the processor subsystem 130. In the preferred embodiment of this invention, a predetermined default color map 214, in the color code section 120 consisting of a look up table of unique combinations of the three color components such as RGB values and corresponding eight bit codes, maps 256 of the most visually significant color combinations out of a possible 4,096, obtained from the three RGB truncated four bit codes. The color map is preferably alterable by the video data processor subsystem.

The 256 color code combinations to be included in the color map are determined on the following basis. Given that each RGB color component is represented as a four bit code, a range of 16 gradations of each color component is possible. However, in practice the colors at the extremes of each range of gradations rarely appear in images captured by a video camera. Statistical surveys of a wide variety of scenes captured by video cameras reveal a control distribution of colors. To illustrate the distribution, a two-dimensional chart of a range of from 0 to 16 of green downward along a vertical axis, with a range of from 0 to 16 of blue to the right across a horizontal axis yields an oval shaped pattern in the middle, along an axis from 0,0 to 15,15. Adding a third dimension of red yields a sausage-shaped distribution of the most visually significant color combinations from a wide variety of possible scenes and images. A combination selected from an extremity of this sausage-shaped distribution has been found to be virtually indistinguishable from a color combination at a nearby extremity of the three-dimensional color block, and within the sausage-shaped distribution, color combinations proximal to each other are also virtually indistinguishable. By careful selection of 256 representative color combinations from blocks within this sausage-shaped distribution, a color map can thus be constructed of the most visually significant color combinations likely to be encountered. In practice it has been found that an RGB ratio of 4:3:2 produces colors in the skin tone ranges, and this information can be used to balance the color ratio distribution, with the primary factor being subjective appearance.

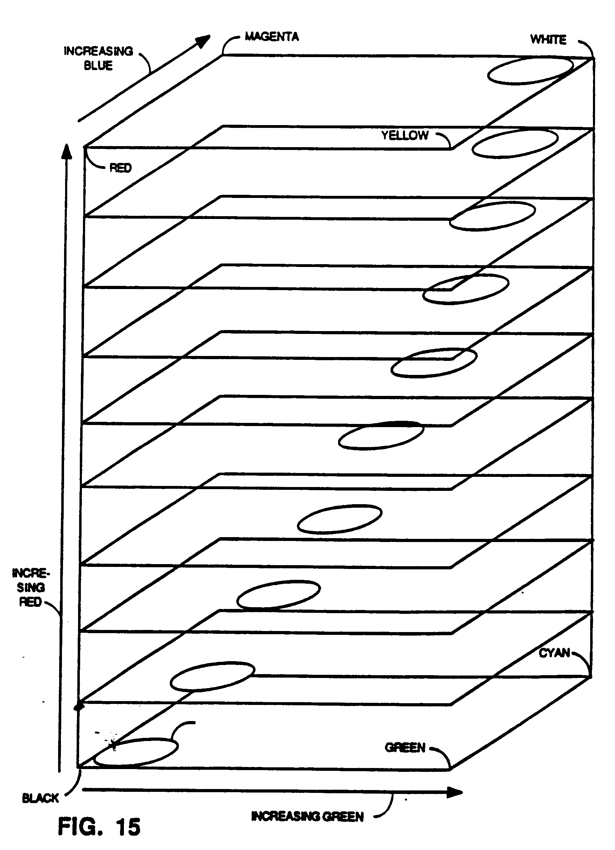

The color mapping process makes use of the observation that most colors that occur in nature are not very pure. Figure 15 shows a color cube with no color, black, in the front lower left corner and white which is the maximum red, green and blue in the upper right back corner. Green increases to the right from the black, all zeros, origin. Blue increases from the black toward the lower left back corner and red is represented by a number of planes representing constant levels of red. The red increases in the direction of the top of the cube. Thus all of the possible colors may be represented in the cube to a precision which is dependent on the number of bits allocated to each color component. Any specific color may be represented by the coordinates of any point within the cube.

All of the real colors seem to be heavily bunched along a sausage shape which runs from the black corner in an upward arc to the white corner. Since the colors are concentrated with no natural colors occurring in the pure red, green, blue, magenta, cyan or yellow corners, it is possible to reduce the number of color codes form the 4096 possible prepresented by 4 bits each of red, green and blue. The ovals represented by 260, identify the areas which must be reproduced with some precision because the real colors concentrate here.

It is really only necessary to have flesh tones be faithful reproductions with slight off-colors in other areas being quite acceptable since the persons on the receiving end do not know exactly what colors were present in the transmitting end of the system although a correction process may be applied if it is important. The approach for generating the color map has been to define fine gradations in color in the flesh tones with more coarse gradations the further the captured color is away from the central "sausage". The map was empirically derived from examining the color distributions in a large number of pictures and adjusting the map parameters to get acceptable results. The correction process consists of analyzing the actual colors which occur in each of the map areas and correcting the map segment so that it more faithfully represents the detected colors in that scene. The process is quite subjective but seems to work well.

In the processor subsystem, a histogram of the RGB color codes 212 is statistically processed for all of the run length combinations to update the color map 214 to be used as a look up table. Even with the four bit color codes for each of the RGB components, up to 4,096 different color combinations would be theoretically achievable. In practice, it has been found that a group of carefully selected 256 color combinations is quite adequate to serve as apex colors for the drawing engine to construct the image with up to 262,144 colors with six bit color reconstruction of each of the three color components. Alternatively further gradations are possible by reconstructing each of the three color components as eight bit codes. Therefore, the histogram of 256 of the most frequent RGB color combinations may be used to modify the colors encoded as a series of eight bit digital words in the color code look up table or color map 214. Since each color combination in the color map represents a block of ranges of colors, the color frequency histogram may be used to substitute a more frequently occurring color combination within its color block as a representative color combination, for more faithful color reproduction. As these representative colors are within the color block for those colors, the substituted colors are determined by the system are visually significant, and are not merely selected upon frequency of appearance in the picture.

The RGB color information requirement for 12 bits to represent the maximum of 4,096 colors is thus reduced to a table of 256 8 bit digital words to represent the 256 most visually significant colors. Less frequently occurring colors which may be over the limit of 256 colors may also forced to conform to the same coloration as the nearest color code combination in the color map, without significant lessening of the accuracy of the colors in the picture frame to be transmitted. Once the color codes are in the form of eight bit digital words 206 which may be combined with the four bit run length portion 207, the four bit run length code, which actually represents a run length of from 2 to 17 pixels in the preferred implementation of the encoding of run lengths, can be statistically processed to provide a varying length digital word 208 to be assembled in the eventual fully processed run length color code combination 210. The run length codes may vary from one bit for most frequent lengths up to 8 or 10 for rarely occurring lengths. Thus, the run length may represent from 2 to 257 pixels, which would be theoretically adequate to represent an entire scan line of 512 pixels in two run length color code combinations. Thus, the four bit run lengths are concatenated where possible at 216 finally before encoding the run length and color code combinations at 218. In order to accommodate the encoding of the eight bit RGB color components in the run length combinations, it is also necessary to construct and encode the color code look up table 214 as a table of 256 individual four bit color codes for each of the RGB components, which would be transmitted with the color code run length combinations to enable a receiver or translator of the picture information to decode compressed color information.

More advanced processing and compression of the run length color code combinations may also occur in the advanced processing section 220. Similar to the pixel to pixel differencing and comparison for determination of decision points in the input construction engine, adjacent scan lines may be compared to formulate a table of scan lines which do not differ from the previous scan line in the direction of scanning, so that the lines or portions of lines may be merely duplicated. Thus, this would allow further compression of the run length and color code combinations 210 as a differences table 222. Another technique termed subframe processing may be used to reduce the amount of data which must be sent to update a new picture on the receiving section of a system. This subframe processing technique samples every nth line and continues processing only with those lines for any one image. Distinctive segments of run length combinations which appear to form an edge may be detected in an edge detector 224 to monitor the displacement of such segments from frame-to-frame by movement analysis 226, which preferably could track the movement of such scan line segments in groups of scan line segments according to any horizontal shifting, shrinking, growing, or vertical displacement of such segments, or virtually any combination of such movements. A further level of compression involves the frame-to-frame differencing by comparison of the run length and color codes combination information from the last picture frame with the current picture frame, and encoding of a skip code to identify those portions which have not changed, so that only the run length and color code combinations which have changed are encoded at 228.

Finally, the processor subsystem also preferably encodes the run length and color code combinations to be transmitted from the processor subsystem by determining a histogram of the occurrence of run length and color code combinations. The preferred form of statistical encoding at this stage is similar to Huffman coding, and involves the assignment of the most frequently occurring combination to a table of one bit digital words, at 230. This table is to be utilized at the receiving end of the system by referring to one or the other of the bit states of the one bit digital word to fill in this most frequently occurring run length combination in a corresponding run length color code table. For example, if the table indicates a binary one, the receiving table would be filled in with the run length color code combination, and would otherwise be left with a marker of zero indicating that the spot in the table was to be filled in later. The next three most occurring combination are then represented as a two bit length digital word, with one of the binary bit states again indicating that the receiving table location was to be filled in later, and the next three most frequently occurring combinations are filled in their respective locations in the corresponding receiving table. A three bit digital word table can then be constructed in a similar fashion to designate the next seven most frequently occurring values, with one of the binary bit states representing values to be filled in later, and so on, with a final digital word size of eight bits used to represent the remaining color code combinations. This process may be applied to other groupings than the 1, 2, 3, n bit grouping sequences described above. Most preferably, this statistical encoding of the compressed run length color code information is performed for at least the color codes, individually, with the run length portions then being encoded and received as a separate table of eight bit digital words, but it is also possible to separately statistically encode the eight bit run length portions in a similar fashion and transmit a separate statistically encoded table for the run length components of the run length-color code combinations. Other similar statistical encoding approaches may also be appropriate as an alternative.

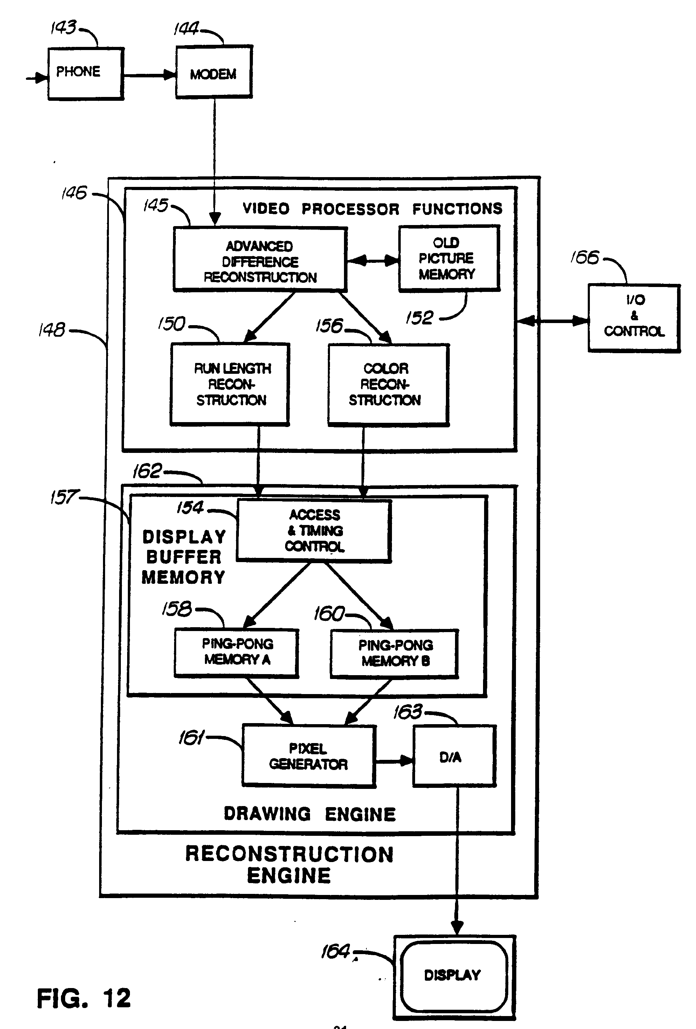

Referring to Fig. 12, in which elements 143 to 166 are essentially identical to those previously described which bear reference numerals 43 to 66, in the preferred mode of the invention the telephone 143 receives the audio digitized signals from the transmitter modem over ordinary telephone lines, which is in turn received by the receiving modem 144, and the video data processor 146, which prepares the digitized video signal in a form and format adapted to the receivable by the drawing engine 162. The video data processor 146 is connected to the input/output and control section 166. The architecture of the processor subsystem is generally as has been described and illustrated in Fig. 9. The digitized signal representing combinations of a plurality of run lengths of a first digital word size and digitally compressed color component code of at least a portion of a plurality of scan lines of a video picture frame, and a look up table of the digitally compressed color component codes, are subjected to decoding of the color component codes according to the look up table to form a table of the three digital color component in the memory of the processor color reconstruction at 156, and the run length and color components are sent to the display buffer memory 157, which includes the dual memory space 172, the access timing and control 154 and the two pingpong buffers 158 and 160.

As with the signal processed by the reconstruction engine discussed with reference to Fig. 7, the run length decoder 150 receives the decompressed run length information, and the color component information, for decoding of the run length information, is reconstructed in 156. The color and lengths information are compared with the prior picture 152 for mapping at 150 and 156 to the display buffer memory 157 which comprises the pingpong memory "A" 158 and the pingpong memory "B" 160. The pixel generator 161 is slaved by the display buffer memory 157 from the pingpong memories alternately, to reconstruct the scan lines of the transmitted picture pixel by pixel, which is then converted from digital form to analog form in the digital to analog converter 163, for display on the monitor 164.

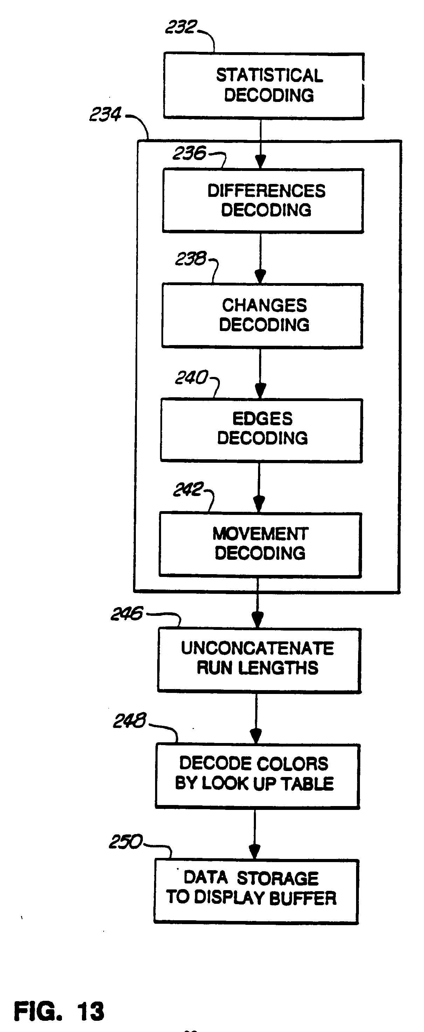

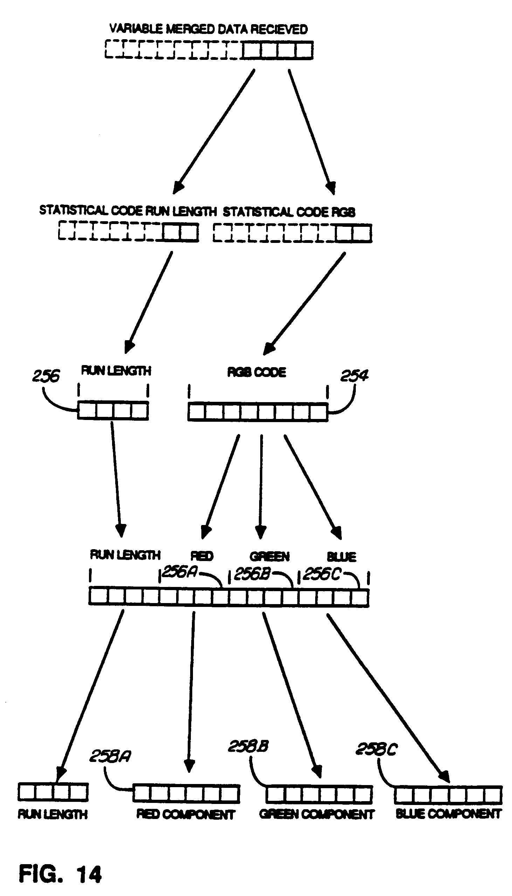

With reference to Figs. 13 and 14, in the preferred embodiments of the processor subsystem 146 of the invention, prior to the difference reconstruction at 145 occurring in video data processor, the statistical coding is decoded at 232 and possibly also at 234 by formation of a table in the memory of the processor subsystem of the run length and associate color codes, to be filled in at 156 according to the look up table, as explained previously. In the advanced difference reconstruction operations 145, the frame-to-frame differences and line-to-line differences tables are decoded at 234 for decoding the differences from frame-to-frame at 236 or changes from line-to-line at 238, with reference to the old picture memory 152. Also in the difference reconstruction operation, the tables representing the edges and movement are decoded at 240 and 242, with the picture information between the edges being constructed by interpolation. The division at 246 of run lengths of the concatenated digital word size to run lengths of a four bit digital word size occurs in the run length reconstruction operation 150. The decoding of the compressed color codes in the color reconstruction operation 156, according to the look up table, occurs at 248, allowing the four bit, six bit, or eight bit color component codes to be assigned to the run lengths, for storage at 250 in the display buffer memory 157.

Thus, referring to Fig. 14, in the statistical decoding of the fully compressed digitized signal, the tables reconstructed are of the four bit digital word size run length 256, and the eight bit digital word size RGB compressed color code 254. The run length-color decoder treats the run length portion separately to provide the four bit digital word size run length portions 256; and the eight bit digital word size RGB compressed color codes are decoded to provide the individual four bit digital word size RGB components 256a, 256b, and 256c. The four bit run length and four bit digital RGB color codes are mapped to the buffer memory, for processing by the reconstruction engine, and transmission to the pixel generator, where the four bit digital color components are expressed as an interpolation of six bit digital RGB components 258a, 258b, and 258c, for individual pixels between start and stop points representing the run length.

Although the invention has been described in the context of a video telephone conferencing system, the invention may be also be adapted for use in decompressing color video data from magnetic media, such as hard disks or three and a half inch high capacity magnetic floppy discs which may be used in storing and communicating such data via computer systems, or from video discs for video disc players which could transmit the information in the form of a video movie.

In the foregoing description, it has been demonstrated that the method and system of the invention permit compression and retrieval of color video data by the truncation of least significant information from the color component codes, and the statistical encoding of the most visually significant color code combinations. The invention also allows for compression and retrieval of video color data after further processing of the color video data by further compression of the data by encoding concatenated run lengths, line-to-line differences, movement of segments of picture frames and portions of picture frames which have changed to reduce the account of information to be encoded to the minimum account. The invention further provides for the additional coding and decoding of data according to a form of statistical encoding, which permits a further reduction of the amount of information which must be transmitted by the system.

## Claims

1. A method of compressing digital colour video data in a video system having means (10, 11; 110, 112) for providing a color video signal for a plurality of video picture frames, each picture frame comprising a plurality of scan lines composed of a plurality of pixels and utilizing a digitized color video signal having three digital color components, said video system including means (18; 118) for determining a luminance function for each pixel, means (26; 126) for determining which of said pixels on each scan line represent decision points based upon said luminance function, each decision point defining the end of one run length and the beginning of another run length, and means (28, 29; 128, 129) for encoding at least a portion of said plurality of pixels in each scan line as a plurality of combinations of said run lengths and associated three digital color components, each of said run lengths being of a first digital word size, and said three digital color components being of second, third and fourth digital word sizes, respectively, the method comprising the steps of:

a) encoding all of said digital color components in said picture frame according to a look-up table (24) in a memory means of digitally compressed color codes of the most visually significant color combinations of a fifth digital word size smaller than the sum of said second, third and fourth digital word sizes; and

b) combining each of said run lengths with associated digitally compressed color code to represent at least a portion of said picture frame in said memory means.

2. The method of Claim 1, further including the step of modifying said look-up table (214) by determining up to a predetermined number of the most visually significant color combinations of said digital color components in at least a portion of said picture frame, and substituting at least one of said predetermined number of the most visually significant color combinations of said digital color components for at least one corresponding existing color combination in said look-up table.

3. The method of Claim 1, further including the step of concatenating adjacent run lengths on each scan line for which said adjacent run lengths have associated digitally compressed color codes which vary less than a predetermined color difference threshold to a sixth digital word size which is larger than said first digital word size.

4. The method of Claim 1, further including the step of statistically encoding in said memory means at least one of said run lengths and associated digitally compressed color code of said combinations of run length and associated digitally compressed color code by determining the frequency of occurrence of values of said at least one of said run length and digitally compressed color code, providing a plurality of code tables, selecting the most frequent occurrence, representing said most frequent occurrence in a first code table by a one bit size digital word, selecting the next three most frequent occurrences, representing said next three most frequent occurrences in a second code table by a two bit digital size word, and representing all of the other frequencies of occurrence in at least one additional code table by a digital word size larger than two bits.

5. The method of Claim 1, further including the step of determining distinctive edges of a sequence of said combinations of run length and associated digitally compressed color code in at least one scan line for each picture frame, and encoding a table of changes in said sequences between said distinctive edges as a table in said memory means representing a movement of said sequence from one frame to another frame sequentially.

6. A system for compressing digital color video data in a video system having means (10, 12; 110, 112) for providing a color video signal for a plurality of video picture frames, with each picture frame comprising a plurality of scan lines composed of a plurality of pixels and utilizing a digitized color video signal having three digital color components, said video system including means (18; 118) for determining a luminance function for each pixel, means (26; 126) for determining which of said pixels on each scan line represent decision points based upon said luminance function, each decision point defining the end of one run length and the beginning of another run length, and means (28, 29; 128, 129) for encoding at least a portion of said plurality of pixels in each scan line as a plurality of combinations of said run lengths and associated said three digital color components, each of said run lengths being of a first digital word size, and said three digital color components being of second, third, and fourth digital word sizes, respectively, said system for compressing digital color video data comprising:

a) means (212, 214) for encoding all of said digital color components in said picture frame according to a look-up table (214) in a memory means of digitally compressed color codes of the most visually significant color combinations of a fifth digital word size smaller than the sum of said second, third and fourth digital word sizes; and

b) means (28, 29; 128; 129) for combining each of said run lengths with associated digitally compressed color codes to represent at least a portion of said picture frame in said memory means.

7. The system of Claim 6, further including means (212) for modifying said look-up table (214) by determining up to a predetermined number of the most visually significant color combinations of said digital color components in at least a portion of said picture frame; and for substituting at least one of said predetermined number of the most visually significant color combinations of said digital color components for at least one corresponding existing color combination in said look-up table (214).

8. The system of Claim 6, further including means (216) for concatenating adjacent run lengths on each scan line for which said adjacent run lengths have associated digitally compressed color codes which vary less than a predetermined color difference threshold to a sixth digital word size which is larger than said first digital word size.

9. The system of Claim 6, further including means (230) for statistically encoding in said memory means at least one of said run lengths and associated digitally compressed color code of said combinations of run length and associated digitally compressed color code by determining the frequency of occurrence of values of said at least one of said run length and associated digitally compressed color code, for providing a plurality of code tables, for selecting the most frequent occurrence, for representing said most frequent occurrence in a first code table by a one bit size digital word, for selecting the next three most frequent occurrences, for representing said next three most frequent occurrences in a second code table by a two bit digital word size, and for representing all of the other frequencies of occurrence in at least one additional code table by a digital word size larger than two bits.

10. The system of Claim 6, further including means (224) for determining distinctive edges of a sequence of said combinations of run length and associated digitally compressed color code in at least one scan line for each picture frame, and for encoding a table in said memory means of changes in said sequences between siad distinctive edges as a table in said memory means representing a movement of said sequence from one frame to another frame sequentially.

11. A method of decompressing digital color video data compressed in a video system utilizing a plurality of digitized signals representing a plurality of combinations of run length of a first digital word size, said run length being determined on the basis of a luminance function of the pixel data of the original uncompressed color video data, and associated digitally compressed color code of a second digital word size for at least a portion of a plurality of scan lines of a video picture frame, and utilising a look-up table (248) of said digitally compressed color codes for the most visually significant color combinations of three corresponding digital color components, said method comprising the steps of:
a) dividing each of said combinations into a run length and associated digitally compressed color code;
b) decoding said digitally compressed color codes according to said look-up table (248) to form a table in a memory means of said three digital color components for each said run length, said three digital color components having third, fourth, and fifth digital word sizes, respectively, the sum of which is larger than said second digital word size; and
c) storing at least a portion of said run length and corresponding digital color components in an array in a buffer memory means (57) of run length and digital color component data representing said plurality of scan lines in said video picture frame.

12. The method of Claim 11, wherein said run length of said combinations comprises concatenated run lengths, the method further including the step of dividing said concatenated run length and corresponding digital color components into a plurality of unconcatenated run length and corresponding digital color components having a run length portion of a sixth digital word size that is smaller than said first digital word size.

13. The method of Claim 11, wherein said plurality of digitized signals representing a plurality of combinations of run length and associated digitally compressed color code has been statistically encoded with reference to a plurality of code tables according to the frequency of occurrence of said digitally compressed color codes; the method further including the steps of decoding said statistically encoded run length and associated digitally compressed color code combinations by mapping the most frequent occurrence of said values to an array according to a table of one bit size digital words; mapping the next three most frequent occurrences of said values according to a code table including a two bit digital word size for each value in said array; and mapping all of the other values in said array according to a table of values having a digital word size larger than two bits.

14. The method of Claim 11, wherein distinctive edges of an image segment represented by combinations of run length and associated digitally compressed color code in at least one scan line have been encoded in a table for each picture frame representing changes in said sequences as movement of said image segment from one frame to another frame sequentially; the method further including the step of storing said changes in said image segment of combinations of said run length and associated digitally compressed color code in said array.

15. A system for decompressing digital color video data in a video system utilizing a plurality of digitized signals representing a plurality of combinations of run length and associated digitally compressed color code for at least a portion of a plurality of scan lines of a video picture frame, and utilising a look-up table (248) of said digitally compressed color codes for the most visually significant color combinations of three corresponding digital color components, said run length being of a first digital word size and being determined on the basis of a luminance function of the pixel data of the original uncompressed color video data, and said digitally compressed color codes being of a second digital word size, respectively, the system comprising:

    a) means (45; 145) for dividing each of said combinations into a run length and associated digitally compressed color code;

    b) means (156) for decoding said digitally compressed color codes according to said look-up table (248) to form a table in a memory means of said three digital color components for each said run length, said three decoded color components having third, fourth, and fifth digital word sizes, respectively, the sum of which is larger than said second digital word; and

    c) means (154) for storing at least a portion of said run length and said corresponding digital color components in an array in a buffer memory (157) of run length and color component data representing said plurality of scan lines in said video picture frame.

16. The system of Claim 15, wherein said run lengths of said combinations comprise concatenated run lengths, the system further including means (150, 246) for dividing said concatenated run length and corresponding digital color components into a plurality of unconcatenated run length and corresponding digital color components having a run length portion of a sixth digital word size that is smaller than said first digital word size.

17. The system of Claim 15, wherein said plurality of digitized signals representing a plurality of combinations of run length and associated digitally compressed color code has been statistically encoded with reference to a plurality of code tables according to the frequency of occurrence of said digitally compressed color codes; the system further including means (232) for decoding said statistically encoded run length and associated digitally compressed color code combinations by mapping the most frequent occurrence of said values to said array according to a table of one bit size digital words; mapping the next three most frequent occurrences of said values according to a code table including a two bit digital word size for each value in said array; and mapping all of the other values in said array according to a table of values having a digital word size larger than two bits.

18. The system of Claim 15, wherein distinctive edges of an image segment represented by combinations of run length and associated digitally compressed color code in at least one scan line have been encoded in a table for each picture frame representing changes in said combinations as movement of said image segment from one frame to another frame sequentially; the system further including means (145, 234) for storing said changes in said image segment of combinations of said run length and associated digitally compressed color code in said array.

**Patentansprüche**

1. Verfahren zum Komprimieren digitaler Farbvideodaten in einem Videosystem, welches Mittel (10, 11; 110, 112) aufweist, um ein Farbvideosignal für eine Mehrzahl von Videobildern bereitzustellen, wobei jedes Bild eine Mehrzahl von Abtastzeilen umfaßt, die aus einer Mehrzahl von Pixeln aufgebaut sind, und ein digitalisiertes Farbvideosignal mit drei digitalen Farbkomponenten benutzt, wobei das Videosystem umfaßt:

    - Mittel (18; 118), um eine Luminanzfunktion für jedes Pixel zu bestimmen,

    - Mittel (26; 126), um auf Grundlage der Luminanzfunktion zu bestimmen, welche Pixel auf jeder Abtastzeile Entscheidungspunkte darstellen, wobei jeder Entscheidungspunkt das Ende einer Lauflänge und den Anfang einer anderen Lauflänge festlegt, und

    - Mittel (28, 29; 128, 129), um zumindest einen Teil der Mehrzahl von Pixeln in jeder Abtastzeile als eine Mehrzahl von Kombinationen der Lauflängen und zugeordneter dreier digitaler Farbkomponenten zu kodieren, wobei die Lauflängen jeweils eine erste Digitalwortgröße haben und die drei digitalen Farbkomponenten eine zweite, dritte bzw. vierte Digitalwortgröße haben,

wobei das Verfahren die Schritte umfaßt:

    a) Kodieren aller digitalen Farbkomponenten in dem Bild gemäß einer Tabelle (24) in einem Speichermittel von digital komprimierten Farbcodes der visuell signifikantesten Farbkombinationen einer fünften Digitalwortgröße, welche kleiner als die Summe der zweiten, dritten und vierten Digitalwortgröße ist, und

    b) Kombinieren jeder der Lauflängen mit einem zugeordneten digital komprimierten Farbcode, um zumindest einen Teil des Bilds in dem Speichermittel darzustellen.

2. Verfahren nach Anspruch 1, ferner umfassend den Schritt: Modifizieren der Tabelle (214), indem bis hin zu einer vorbestimmten Anzahl die visuell signifikantesten Farbkombinationen der digitalen Farbkomponenten in wenigstens einem Teil des Bilds bestimmt und wenigstens eine der vorbestimmten Anzahl der visuell signifikantesten Farbkombinationen der digitalen Farbkomponenten gegen wenigstens eine entsprechende vorhandene Farbkombination in der Tabelle ersetzt werden.

3. Verfahren nach Anspruch 1, ferner umfassend den Schritt: Verknüpfen benachbarter Lauflängen auf jeder Abtastzeile, für die die benachbarten Lauflängen zugeordnete digital komprimierte Farbcodes aufweisen, welche um weniger als eine vorbestimmte Farbdifferenzschwelle variieren, zu einer sechsten Digitalwortgröße, die größer als die erste Digitalwortgröße ist.

4. Verfahren nach Anspruch 1, ferner umfassend den Schritt: Statistisches Kodieren in dem Speichermittel der Lauflängen und/oder des zugeordneten digital komprimierten Farbcodes der Kombinationen von Lauflänge und zugeordnetem digital komprimierten Farbcode, indem die Häufigkeit des Vorkommens von Werten der Lauflänge und/oder des digital komprimierten Farbcodes bestimmt wird, eine Mehrzahl von Codetabellen bereitgestellt wird, das häufigste Vorkommen ausgewählt wird, das häufigste Vorkommen in einer ersten Codetabelle durch ein Digitalwort der Größe ein Bit dargestellt wird, die drei nächsthäufigsten Vorkommen ausgewählt werden, die drei nächsthäufigsten Vorkommen in einer zweiten Codetabelle durch ein Digitalwort der Größe zwei Bit dargestellt werden und alle anderen Vorkommenshäufigkeiten in wenigstens einer zusätzlichen Codetabelle durch eine Digitalwortgröße dargestellt werden, die größer als zwei Bit ist.

5. Verfahren nach Anspruch 1, ferner umfassend den Schritt: Bestimmen von unterscheidenden Rändern einer Folge der Kombinationen von Lauflänge und zugeordnetem digital komprimierten Farbcode in wenigstens einer Abtastzeile für jedes Bild und Kodieren einer Tabelle von Änderungen in den Folgen zwischen den unterscheidenden Rändern als eine Tabelle in dem Speichermittel, die eine Bewegung der Folge nacheinander von einem Bild zu einem anderen Bild darstellt.

6. System zum Komprimieren digitaler Farbvideodaten in einem Videosystem, welches Mittel (10, 12; 110, 112) aufweist, um ein Farbvideosignal für eine Mehrzahl von Videobildern bereitzustellen, wobei jedes Bild eine Mehrzahl von Abtastzeilen umfaßt, die aus einer Mehrzahl von Pixeln aufgebaut sind, und ein digitalisiertes Farbvideosignal mit drei digitalen Farbkomponenten benutzt, wobei das Videosystem umfaßt:
- Mittel (18; 118), um eine Luminanzfunktion für jedes Pixel zu bestimmen,
- Mittel (26; 126), um auf Grundlage der Luminanzfunktion zu bestimmen, welche Pixel auf jeder Abtastzeile Entscheidungspunkte darstellen, wobei jeder Entscheidungspunkt das Ende einer Lauflänge und den Anfang einer anderen Lauflänge festlegt, und
- Mittel (28, 29; 128, 129), um zumindest einen Teil der Mehrzahl von Pixeln in jeder Abtastzeile als eine Mehrzahl von Kombinationen der Lauflängen und zugeordneter dreier digitaler Farbkomponenten zu kodieren, wobei die Lauflängen jeweils eine erste Digitalwortgröße besitzen und die drei digitalen Farbkomponenten eine zweite, dritte bzw. vierte Digitalwortgröße besitzen,

wobei das System zum Komprimieren von digitalen Farbvideodaten umfaßt:

a) Mittel (212, 214) zum Kodieren aller digitalen Farbkomponenten in dem Bild gemäß einer Tabelle (214) in einem Speichermittel von digital komprimierten Farbcodes der visuell signifikantesten Farbkombinationen einer fünften Digitalwortgröße, welche kleiner als die Summe der zweiten, dritten und vierten Digitalwortgröße ist, und

b) Mittel (28, 29; 128; 129) zum Kombinieren jeder der Lauflängen mit zugeordneten digital komprimierten Farbcodes, um zumindest einen Teil des Bilds in dem Speichermittel darzustellen.

7. System nach Anspruch 6, ferner umfassend Mittel (212) zum Modifizieren der Tabelle (214), indem bis hin zu einer vorbestimmten Anzahl die visuell signifikantesten Farbkombinationen der digitalen Farbkomponenten in wenigstens einem Teil des Bilds bestimmt werden, und zum Ersetzen wenigstens einer der vorbestimmten Anzahl der visuell signifikantesten Farbkombinationen der digitalen Farbkomponenten gegen wenigstens eine entsprechende vorhandene Farbkombination in der Tabelle (214).

8. System nach Anspruch 6, ferner umfassend Mittel (216) zum Verknüpfen benachbarter Lauflängen auf jeder Abtastzeile, für die die benachbarten Lauflängen zugeordnete digital komprimierte Farbcodes aufweisen, welche um weniger als eine vorbestimmte Farbdifferenzschwelle variieren, zu einer sechsten Digitalwortgröße, die größer als die erste Digitalwortgröße ist.

9. System nach Anspruch 6, ferner umfassend Mittel (230) zum statistischen Kodieren in dem Speichermittel der Lauflängen und/oder des zugeordneten digital komprimierten Farbcodes der Kombinationen von Lauflänge und zugeordnetem digital komprimierten Farbcode, indem die Häufigkeit des Vorkommens von Werten der Lauflänge und/oder des zugeordneten digital komprimierten Farbcodes bestimmt wird, zum Bereitstellen einer Mehrzahl von Codetabellen, zum Auswählen des häufigsten Vorkommens, zum Darstellen des häufigsten Vorkommens in einer ersten Codetabelle durch ein Digitalwort der Größe ein Bit, zum Auswählen der drei nächsthäufigsten Vorkommen, zum Darstellen der drei nächsthäufigsten Vorkommen in einer zweiten Codetabelle durch eine Digitalwortgröße von zwei Bit und zum Darstellen aller anderen Vorkommenshäufigkeiten in wenigstens einer zusätzlichen Codetabelle durch eine Digitalwortgröße, die größer als zwei Bit ist.

10. System nach Anspruch 6, ferner umfassend Mittel (224) zum Bestimmen von unterscheidenden Rändern einer Folge der Kombinationen von Lauflänge und zugeordneten digital komprimierten Farbcode in wenigstens einer Abtastzeile für jedes Bild und zum Kodieren einer Tabelle in dem Speichermittel von Änderungen in den Folgen zwischen den unterscheidenden Rändern als eine Tabelle in dem Speichermittel, die eine Bewegung der Folge nacheinander von einem Bild zu einem anderen Bild darstellt.

11. Verfahren zum Dekomprimieren von digitalen Farbvideodaten, die in einem Videosystem komprimiert wurden, welches eine Mehrzahl von digitalisierten Signalen verwendet, die eine Mehrzahl von Kombinationen einer Lauflänge einer ersten Digitalwortgröße - wobei die Lauflänge auf Grundlage einer Luminanzfunktion der Pixeldaten der ursprünglichen, nicht komprimierten Farbvideodaten bestimmt wird - und eines zugeordneten digital komprimierten Farbcodes einer zweiten Digitalwortgröße für zumindest einen Teil einer Mehrzahl von Abtastzeilen eines Videobilds darstellen, und eine Tabelle (248) der digital komprimierten Farbcodes für die visuell signifikantesten Farbkombinationen dreier entsprechender digitaler Farbkomponenten verwendet, wobei das Verfahren die Schritte umfaßt:
a) Aufteilen jeder der Kombinationen in eine Lauflänge und einen zugeordneten digital komprimierten Farbcode,
b) Dekodieren der digital komprimierten Farbcodes gemäß der Tabelle (248), um in einem Speichermittel eine Tabelle der drei digitalen Farbkomponenten für jede Lauflänge zu bilden, wobei die drei digitalen Farbkomponenten eine dritte, vierte bzw. fünfte Digitalwortgröße haben, deren Summe größer als die zweite Digitalwortgröße ist, und
c) Speichern zumindest eines Teils der Lauflänge und entsprechenden digitalen Farbkomponenten in einem Feld in einem Pufferspeichermittel (57) von Lauflängen- und Digitale-Farbkomponenten-Daten, welche die Mehrzahl von Abtastzeilen in dem Videobild darstellen.

12. Verfahren nach Anspruch 11, bei dem die Lauflänge der Kombinationen verknüpfte Lauflängen umfaßt, wobei das Verfahren ferner den Schritt umfaßt:
Aufteilen der verknüpften Lauflänge und entsprechenden digitalen Farbkomponenten in eine Mehrzahl von unverknüpften Lauflängen und entsprechenden digitalen Farbkomponenten mit einem Lauflängen-Teil einer sechsten Digitalwortgröße, welche kleiner als die erste Digitalwortgröße ist.

13. Verfahren nach Anspruch 11, bei dem die Mehrzahl von digitalisierten Signalen, die eine Mehrzahl von Kombinationen von Lauflänge und zugeordnetem digital komprimierten Farbcode darstellen, mit Bezug auf eine Mehrzahl von Codetabellen gemäß der Haufigkeit des Vorkommens der digital komprimierten Farbcodes statistisch kodiert worden sind, wobei das Verfahren ferner die Schritte umfaßt:
Dekodieren der statistisch kodierten Kombinationen von Lauflänge und zugeordnetem digital komprimierten Farbcode, indem das häufigste Vorkommen der Werte auf ein Feld gemäß einer Tabelle von digitalen Worten der Größe ein Bit abgebildet wird,
Abbilden der drei nächsthäufigsten Vorkommen der Werte gemäß einer Codetabelle, die eine Digitalwortgröße von zwei Bit für jeden Wert in dem Feld umfaßt, und
Abbilden aller anderen Werte in dem Feld gemäß einer Tabelle von Werten mit einer Digitalwortgröße, die größer als zwei Bit ist.

14. Verfahren nach Anspruch 11, bei dem unterscheidende Ränder eines Bildsegments, dargestellt durch Kombinationen von Lauflänge und zugeordnetem digital komprimierten Farbcode in wenigstens einer Abtastzeile, in einer Tabelle für jedes Bild kodiert worden sind, welche Änderungen in den Folgen als Bewegung des Bildsegments nacheinander von einem Bild zu einem anderen Bild darstellt, wobei das Verfahren ferner den Schritt umfaßt:
Speichern der Änderungen in dem Bildsegment von Kombinationen der Lauflänge und zugeordnetem digital komprimierten Farbcode in dem Feld.

15. System zum Dekomprimieren von digitalen Farbvideodaten in einem Videosystem, welches eine Mehrzahl von digitalisierten Signalen verwendet, die eine Mehrzahl von Kombinationen einer Lauflänge und eines zugeordneten digital komprimierten Farbcodes für zumindest einen Teil einer Mehrzahl von Abtastzeilen eines Videobilds darstellen, und eine Tabelle (248) der digital komprimierten Farbcodes für die visuell signifikantesten Farbkombinationen dreier entsprechender digitaler Farbkomponenten verwendet, wobei die Lauflänge von einer ersten Digitalwortgröße ist und auf Grundlage einer Luminanzfunktion der Pixeldaten der ursprünglichen, nicht komprimierten Farbvideodaten bestimmt wird und wobei die digital komprimierten Farbcodes jeweils von einer zweiten Digitalwortgröße sind,
wobei das System umfaßt:

a) Mittel (45; 145) zum Aufteilen jeder der Kombinationen in eine Lauflänge und einen zugeordneten digital komprimierten Farbcode,
b) Mittel (156) zum Dekodieren der digital komprimierten Farbcodes gemäß der Tabelle (248), um in einem Speichermittel eine Tabelle der drei digitalen Farbkomponenten für jede Lauflänge zu bilden, wobei die drei dekodierten Farbkomponenten eine dritte, vierte bzw. fünfte Digitalwortgröße haben, deren Summe größer als die zweite Digitalwortgröße ist, und
c) Mittel (154) zum Speichern zumindest eines Teils der Lauflänge und der entsprechenden digitalen Farbkomponenten in einem Feld in einem Pufferspeicher (57) von Lauflängen- und Farbkomponenten-Daten, welche die Mehrzahl von Abtastzeilen in dem Videobild darstellen.

16. System nach Anspruch 15, bei dem die Lauflängen der Kombinationen verknüpfte Lauflängen umfassen, wobei das System ferner umfaßt:
Mittel (150, 246) zum Aufteilen der verknüpften Lauflänge und entsprechenden digitalen Farbkomponenten in eine Mehrzahl von unverknüpften Lauflängen und entsprechenden digitalen Farbkomponenten mit einem Lauflängen-Teil einer sechsten Digitalwortgröße, welche kleiner als die erste Digitalwortgröße ist.

17. System nach Anspruch 15, bei dem die Mehrzahl von digitalisierten Signalen, die eine Mehrzahl von Kombinationen von Lauflänge und zugeordnetem digital komprimierten Farbcode darstellen, mit Bezug auf eine Mehrzahl von Codetabellen gemäß der Haufigkeit des Vorkommens der digital komprimierten Farbcodes statistisch kodiert worden sind, wobei das System ferner umfaßt:
Mittel (232) zum Dekodieren der statistisch kodierten Kombinationen von Lauflänge und zugeordnetem digital komprimierten Farbcode, indem das häufigste Vorkommen der Werte auf das Feld gemäß einer Tabelle von digitalen Worten der Größe ein Bit abgebildet wird, die drei nächsthäufigsten Vorkommen der Werte gemäß einer Codetabelle, die eine Digitalwortgröße von zwei Bit für jeden Wert in dem Feld umfaßt, abgebildet werden und alle anderen Werte in dem Feld gemäß einer Tabelle von Werten mit einer Digitalwortgröße abgebildet werden, die größer als zwei Bit ist.

18. System nach Anspruch 15, bei dem unterscheidende Ränder eines Bildsegments, dargestellt durch Kombinationen von Lauflänge und zugeordnetem digital komprimierten Farbcode in wenigstens einer Abtastzeile, in einer Tabelle für jedes Bild kodiert worden sind, welche Änderungen in den Kombinationen als Bewegung des Bildsegments nacheinander von einem Bild zu einem anderen Bild darstellt,
wobei das System ferner umfaßt:
Mittel (145, 234) zum Speichern der Änderungen in dem Bildsegment von Kombinationen der Lauflänge und zugeordnetem digital komprimierten Farbcode in dem Feld.

**Revendications**

1. Procédé de compression de données numériques de vidéo couleur dans un système vidéo comportant un moyen (10, 12 ; 110, 112) pour délivrer un signal vidéo couleur pour plusieurs vues d'image vidéo, chaque vue d'image comprenant plusieurs lignes de balayage composées de plusieurs pixels et utilisant un signal vidéo couleur numérisé ayant trois composantes numériques de couleur, ledit système vidéo incluant un moyen (18 ; 118) pour déterminer une fonction de luminance pour chaque pixel ; un moyen (26 ; 126) pour déterminer lesquels desdits pixels sur chaque ligne de balayage représentent des points de décision en se basant sur ladite fonction de luminance, chaque point de décision définissant la fin d'une séquence et le commencement d'une autre séquence ; et un moyen (28, 29 ; 128, 129) pour coder au moins une partie desdits plusieurs pixels dans chaque ligne de balayage sous forme de plusieurs combinaisons desdites séquences et des trois composantes numériques de couleur associées, chacune desdites séquences étant d'une première taille de mot numérique, et lesdites trois composantes numériques de couleur étant, respectivement, d'une deuxième, troisième et quatrième taille de mot, le procédé comprenant les étapes :

    a) de codage de la totalité desdites composantes numériques de couleur de ladite vue d'image d'après une table de consultation (214), dans un moyen de mémorisation de codes de couleur comprimés de façon numérique, des combinaisons de couleurs les plus significatives visuellement, d'une cinquième taille de mot numérique plus petite que la somme desdites deuxième, troisième et quatrième tailles de mot numérique ; et

    b) de combinaison de chacune desdites séquences avec un code de couleur comprimé de façon numérique associé, pour représenter au moins une partie de ladite vue d'image dans ledit moyen de mémorisation.

2. Procédé selon la revendication 1, comprenant en outre l'étape de modification de ladite table de consultation (214) en déterminant jusqu'à un nombre prédéterminé des combinaisons de couleurs les plus significatives visuellement desdites composantes numériques de couleur dans au moins une partie de ladite vue d'image, et en substituant au moins l'une dudit nombre prédéterminé desdites combinaisons de couleurs les plus significatives visuellement desdites composantes numériques de couleur à au moins une combinaison de couleurs existante correspondante dans ladite table de consultation.

3. Procédé selon la revendication 1, comprenant en outre l'étape de concaténation de séquences adjacentes sur chaque ligne de balayage pour laquelle lesdites séquences adjacentes ont des codes de couleur comprimés de manière numérique associés qui varient moins qu'un seuil de différence de couleur prédéterminé, en une sixième taille de mot numérique qui est plus grande que ladite première taille de mot numérique.

4. Procédé selon la revendication 1, comprenant en outre l'étape de codage de manière statistique dans ledit moyen de mémorisation d'au moins l'une desdites séquences et dudit code de couleur comprimé de manière numérique associé, desdites combinaisons de séquence et code de couleur comprimé de manière numérique associé, en déterminant la fréquence d'occurrence des valeurs de ladite au moins une desdites séquences et dudit code de couleur comprimé de manière numérique, en créant plusieurs tables de code, en sélectionnant l'occurrence la plus fréquente, en représentant de ladite occurrence la plus fréquente dans une première table de code par un mot numérique de la taille d'un bit, en sélectionnant les trois occurrences les plus fréquentes suivantes, en représentant lesdites trois occurrences les plus fréquentes suivantes dans une seconde table de code par un mot numérique d'une taille de deux bits, et en représentant toutes les autres fréquences d'occurrence dans au moins une table de code supplémentaire par une taille de mot numérique plus grande que deux bits.

5. Procédé selon la revendication 1, comprenant en outre l'étape de détermination des limites distinctives d'une suite desdites combinaisons de séquence et code de couleur comprimé de manière numérique associé, dans au moins une ligne de balayage pour chaque vue d'image, et de codage d'une table des changements dans lesdites suites entre lesdites limites distinctives, sous forme d'une table dans ledit moyen de mémorisation représentant de façon séquentielle le mouvement de ladite suite d'une vue à une autre vue.

6. Système pour comprimer des données numériques de vidéo couleur dans un système vidéo comportant un moyen (10, 12 ; 110, 112) pour délivrer un signal vidéo couleur pour plusieurs vues d'image vidéo, chaque vue d'image comprenant plusieurs lignes de balayage composées de plusieurs pixels et utilisant un signal vidéo couleur numérisé ayant trois composantes numériques de couleur, ledit système vidéo incluant un moyen (18 ; 118) pour déterminer une fonction de luminance pour chaque pixel ; un moyen (26 ; 126) pour déterminer lesquels desdits pixels sur chaque ligne de balayage représentent des points de décision en se basant sur ladite fonction de luminance, chaque point de décision définissant la fin d'une séquence et le commencement d'une autre séquence ; et un moyen (28, 29 ; 128, 129) pour coder au moins une partie desdits plusieurs pixels dans chaque ligne de balayage sous forme de plusieurs combinaisons desdites séquences et des trois composantes numériques de couleur associées, chacune desdites séquences étant d'une première taille de mot numérique, et lesdites trois composantes numériques de couleur étant, respectivement, d'une deuxième, troisième et quatrième taille de mot, le système pour comprimer des données numériques de vidéo couleur comprenant :

    a) un moyen de codage (212, 214) pour coder la totalité desdites composantes numériques de couleur de ladite vue d'image d'après une table de consultation (214), dans un moyen de mémorisation de codes de couleur comprimés de façon numérique, des combinaisons de couleurs les plus significatives visuellement, d'une cinquième taille de mot numérique plus petite que la somme desdites deuxième, troisième et quatrième tailles de mot numérique ; et

b) un moyen de combinaison (28, 29 ; 128, 129) pour combiner chacune desdites séquences avec des codes de couleur comprimés de façon numérique associés, pour représenter au moins une partie de ladite vue d'image dans ledit moyen de mémorisation.

7. Système selon la revendication 6, comprenant en outre un moyen de modification (212) pour modifier ladite table de consultation (214) en déterminant jusqu'à un nombre prédéterminé des combinaisons de couleurs les plus significatives visuellement desdites composantes numériques de couleur dans au moins une partie de ladite vue d'image, et pour substituer au moins l'une dudit nombre prédéterminé desdites combinaisons de couleurs les plus significatives visuellement desdites composantes numériques de couleur à au moins une combinaison de couleurs existante correspondante dans ladite table de consultation (214).

8. Système selon la revendication 6, comprenant en outre un moyen de concaténation (216) pour concaténer des séquences adjacentes sur chaque ligne de balayage pour laquelle lesdites séquences adjacentes ont des codes de couleur comprimés de manière numérique associés qui varient moins qu'un seuil de différence de couleur prédéterminé, en une sixième taille de mot numérique qui est plus grande que ladite première taille de mot numérique.

9. Système selon la revendication 6, comprenant en outre un moyen de codage (230) pour coder de manière statistique dans ledit moyen de mémorisation au moins l'une desdites séquences et ledit code de couleur comprimé de manière numérique associé, desdites combinaisons de séquence et code de couleur comprimé de manière numérique associé, en déterminant la fréquence d'occurrence des valeurs de ladite au moins une desdites séquences et dudit code de couleur comprimé de manière numérique, pour créer plusieurs tables de code, pour sélectionner l'occurrence la plus fréquente, pour représenter de ladite occurrence la plus fréquente dans une première table de code par un mot numérique de la taille d'un bit, pour sélectionner les trois occurrences les plus fréquentes suivantes, pour représenter lesdites trois occurrences les plus fréquentes suivantes dans une seconde table de code par un mot numérique d'une taille de deux bits, et pour représenter toutes les autres fréquences d'occurrence dans au moins une table de code supplémentaire par une taille de mot numérique plus grande que deux bits.

10. Système selon la revendication 6, comprenant en outre un moyen de détermination (224) pour déterminer les limites distinctives d'une suite desdites combinaisons de séquence et code de couleur comprimé de manière numérique associé, dans au moins une ligne de balayage pour chaque vue d'image, et pour coder une table des changements dans lesdites suites entre lesdites limites distinctives, sous forme d'une table dans ledit moyen de mémorisation représentant de façon séquentielle le mouvement de ladite suite d'une vue à une autre vue.

11. Procédé de décompression de données numériques de vidéo couleur comprimées dans un système vidéo utilisant plusieurs signaux numérisés représentant plusieurs combinaisons de séquence d'une première taille de mot numérique, ladite séquence étant déterminée sur la base une fonction de luminance de la donnée de pixel d'une donnée vidéo couleur d'origine non comprimée, et d'un code de couleur comprimé de manière numérique associé, d'une seconde taille de mot, pour au moins une partie de plusieurs lignes de balayage d'une vue d'image vidéo, et utilisant une table de consultation (248) desdits codes de couleur comprimés de manière numérique pour les combinaisons de couleurs les plus significatives visuellement de trois composantes numériques de couleur correspondantes, ledit procédé comprenant les étapes :

a) de division de chacune desdites combinaisons en une séquence et un code de couleur comprimé de manière numérique associé ;

b) de décodage desdits codes de couleur comprimés de manière numérique d'après ladite table de consultation (248) pour former une table dans un moyen de mémorisation desdites trois composantes numériques de couleur pour chacune desdites séquences, lesdites trois composantes numériques de couleur ayant, respectivement, des troisième, quatrième, et cinquième tailles de mot numérique dont la somme est plus grande que ladite deuxième taille de mot numérique ; et

c) de mémorisation, dans un moyen de mémorisation tampon (57), d'au moins une partie desdites séquence et composantes numériques de couleur correspondantes dans une matrice de séquence et de données de composantes numériques de couleur représentant lesdites plusieurs lignes de balayage de ladite vue d'image vidéo.

12. Procédé selon la revendication 11, dans lequel ladite séquence desdites combinaisons comprend des séquences concaténées, ledit procédé comprenant en outre l'étape de division de ladite séquence concaténée et desdites composantes numériques de couleur correspondantes en plusieurs séquences et composantes numériques de couleur correspondantes déconcaténées ayant une partie séquence d'une sixième taille de mot numérique qui est plus petite que ladite première taille de mot numérique.

13. Procédé selon la revendication 11, dans lequel lesdits plusieurs signaux numérisés, représentant plusieurs combinaisons de séquence et code de couleur comprimé de manière numérique associé, ont été codés de manière statistique en se référant à plusieurs tables de codage en fonction de la fréquence d'occurrence desdits codes de couleur comprimés de manière numérique ; le procédé comprenant en outre l'étape de décodage desdites combinaisons de séquence et code de couleur comprimé de manière numérique associé codées de manière statistique en cartographiant l'occurrence la plus fréquente desdites valeurs dans une matrice d'après une table de mots numériques de la taille d'un bit ; en cartographiant les trois occurrences les plus fréquentes suivantes desdites valeurs d'après une table de codage incluant une taille de mot numérique de deux bits pour chaque valeur de ladite matrice ; et en cartographiant toutes les autres valeurs de ladite matrice d'après une table de valeurs ayant une taille de mot numérique plus grande que deux bits.

14. Procédé selon la revendication 11, dans lequel les limites distinctives d'un segment d'image, représenté par des combinaisons de séquence et code de couleur comprimé de manière numérique associé, dans au moins une ligne de balayage, ont été codées dans une table pour chaque vue d'image représentant de manière séquentielle les changements dans lesdites séquences en tant que mouvement dudit segment d'image d'une vue à une autre ; le procédé comprenant en outre l'étape de mémorisation, dans ladite matrice, desdits changements dans ledit segment d'image des combinaisons desdites séquence et code de couleur comprimé de manière numérique associé.

15. Système pour décomprimer des données numériques de vidéo couleur dans un système vidéo utilisant plusieurs signaux numérisés représentant plusieurs combinaisons de séquence et code de couleur comprimé de manière numérique associé, pour au moins une partie de plusieurs lignes de balayage d'une vue d'image vidéo, et utilisant une table de consultation (248) desdits codes de couleur comprimés de manière numérique pour les combinaisons de couleurs les plus significatives visuellement de trois composantes numériques de couleur correspondantes, ladite séquence étant d'une première taille de mot numérique et étant déterminée sur la base une fonction de luminance de la donnée de pixel d'une donnée vidéo couleur d'origine non comprimée, et lesdits codes de couleur comprimé de manière numérique étant d'une seconde taille de mot, respectivement, ledit système comprenant :

a) un moyen de division (45 ; 145) pour diviser chacune desdites combinaisons en une séquence et un code de couleur comprimé de manière numérique associé ;

b) un moyen de décodage (156) pour décoder lesdits codes de couleur comprimés de manière numérique d'après ladite table de consultation (248) pour former une table dans un moyen de mémorisation desdites trois composantes numériques de couleur pour chacune desdites séquences, lesdites trois composantes numériques de couleur ayant, respectivement, des troisième, quatrième, et cinquième tailles de mot numérique dont la somme est plus grande que ladite deuxième taille de mot numérique ; et

c) un moyen de mémorisation (154) pour mémoriser, dans un moyen de mémorisation tampon (157), au moins une partie desdites séquence et composantes numériques de couleur correspondantes dans une matrice de séquence et de données de composantes numériques de couleur représentant lesdites plusieurs lignes de balayage de ladite vue d'image vidéo.

16. Système selon la revendication 15, dans lequel lesdites séquences desdites combinaisons comprennent des séquences concaténées, ledit système comprenant en outre un moyen de division (150, 246) pour diviser ladite séquence concaténée et lesdites composantes numériques de couleur correspondantes en plusieurs séquences et composantes numériques de couleur correspondantes déconcaténées ayant une partie séquence d'une sixième taille de mot numérique qui est plus petite que ladite première taille de mot numérique.

17. Système selon la revendication 15, dans lequel lesdits plusieurs signaux numérisés, représentant plusieurs combinaisons de séquence et code de couleur comprimé de manière numérique associé, ont été codés de manière statistique en se référant à plusieurs tables de codage en fonction de la fréquence d'occurrence desdits codes de couleur comprimés de manière numérique ; le système comprenant en outre un moyen de décodage (232) pour décoder lesdites combinaisons de séquence et code de couleur comprimé de manière numérique associé codées de manière statistique en cartographiant l'occurrence la plus fréquente desdites valeurs dans une matrice d'après une table de mots numériques de la taille d'un bit ; en cartographiant les trois occurrences les plus fréquentes suivantes desdites valeurs d'après une table de codage incluant une taille de mot numérique de deux bits pour chaque valeur de ladite matrice ; et en cartographiant toutes les autres valeurs de ladite matrice d'après une table de valeurs ayant une taille de mot numérique plus grande que deux bits.

18. Système selon la revendication 15, dans lequel les limites distinctives d'un segment d'image, représenté par des combinaisons de séquence et code de couleur comprimé de manière numérique associé, dans au moins une ligne de balayage, ont été codées dans une table pour chaque vue d'image représentant de manière séquentielle les changements dans lesdites séquences en tant que mouvement dudit segment d'image d'une vue à une autre ; le système comprenant en outre un moyen de mémorisation (145, 234) pour mémoriser, dans ladite matrice, lesdits changements dans ledit segment d'image des combinaisons desdites séquence et code de couleur comprimé de manière numérique associé.

FIG.1

FIG. 2

FIG. 3

FIG. 4

X MARKS DECISION POINTS

RED GREEN & BLUE
COLORS AT APEX

RUN LENGTH

FIG. 5

FIG. 6

**FIG. 7**

FIG. 8

FIG. 9

EP 0 339 948 B1

**FIG. 10**

212

COLOR CODES
HISTOGRAM

214

COLOR CODES
LOOK UP TABLE

216

CONCATENATE
RUN LENGTHS

218

RUN LENGTH
COLOR ENCODER

220

DIFFERENCES
TABLE

222

EDGE
DETECTOR

224

MOVEMENT
ANALYSIS

226

ENCODE ONLY
CHANGES

228

230

STATISTICAL
ENCODING

**FIG. 11**

30

**FIG. 12**

**FIG. 13**

VARIABLE MERGED DATA RECIEVED

STATISTICAL CODE RUN LENGTH   STATISTICAL CODE RGB

256  RUN LENGTH      RGB CODE      254

RUN LENGTH   RED   GREEN   BLUE
256A   256B   256C

258A   258B   258C

RUN LENGTH   RED COMPONENT   GREEN COMPONENT   BLUE COMPONENT

# FIG. 14

INCREASING
BLUE

MAGENTA

WHITE

RED

YELLOW

INCRE-
SING
RED

CYAN

GREEN

BLACK

INCREASING GREEN

**FIG. 15**